# EUROPEAN PATENT APPLICATION

(11) **EP 4 596 148 A1**
(43) Date of publication of application: **06.08.2025**
(21) Application number: 22967092.2
(22) Date of filing: 29.11.2022
(51) Int. Cl.: B23B 3/16, B23Q 3/06

(54) **CHUCK SOFT JAW, CHUCK SOFT JAW SHAPING METHOD, WORKPIECE PROCESSING METHOD, AND HYBRID MACHINE TOOL**

(71) Applicant: Yamazaki Mazak Corporation, Niwa-gun, Aichi 480-0197 (JP)
(72) Inventor: YAMAZAKI, Ryo, Niwa-gun, Aichi 480-0197 (JP); SHIBAYAMA, Gen, Niwa-gun, Aichi 480-0197 (JP); YAMAMOTO, Yuki, Niwa-gun, Aichi 480-0197 (JP)
(74) Representative: TBK
(86) International application number: PCT/JP2022/043875
(87) International publication number: WO 2024/116257

(57) **Abstract**

The chuck soft jaw is a jaw supported by a chuck main body so as to be movable in a first direction away from a center axis of the chuck main body and in a second direction toward the center axis. The chuck soft jaw includes a first holding surface capable of holding a first surface of a workpiece, and a second holding surface capable of holding a machined surface of the workpiece. The first holding surface has a higher hardness than a hardness of the second holding surface.

## Description

### Technical Field

The present invention relates to a chuck soft jaw, a chuck soft jaw making method, a workpiece machining method, and a hybrid machine tool.

### Background Art

Hard jaws for holding a workpiece and soft jaws for holding a workpiece are known.

A relevant technique is described in Patent Literature 1 that discloses a scroll chuck used with both hard jaws and soft jaws. In the scroll chuck described in Patent Literature 1, the hard jaw is formed with one of a trapezoidal groove and a trapezoidal protrusion, and the soft jaw is formed with the other one of the trapezoidal groove and protrusion. In the scroll chuck described in Patent Literature 1, the hard jaw is attached to a master jaw, and the soft jaw is attached to the hard jaw via the trapezoidal groove and protrusion.

### Citation List

### Patent Literature

[PTL1] Microfilm of Utility Model Application No. 58-145447 (Utility Model Application Publication No. 60-53408)

### Summary of Invention

### Technical Problem

An object of the present invention is to provide a chuck soft jaw, a chuck soft jaw making method, a workpiece machining method, and a hybrid machine tool.

### Solution to Problem

In some embodiments, the chuck soft jaw is a jaw supported by a chuck main body so as to be movable in a first direction away from a center axis of the chuck main body and in a second direction toward the center axis. The chuck soft jaw includes a first holding surface capable of holding a first surface of a workpiece; and a second holding surface capable of holding a machined surface of the workpiece. The first holding surface has a higher hardness than a hardness of the second holding surface.

In some embodiments, the method of making a chuck soft jaw includes a step of attaching a raw material block to the chuck main body; and a step of making a chuck soft jaw from the raw material block with the raw material block being attached to the chuck main body. The step of making the chuck soft jaw from the raw material block includes processing the raw material block to form the first holding surface on the raw material block, and cutting the raw material block to form the second holding surface on the raw material block.

In some embodiments, the workpiece machining method includes: a step of preparing a chuck soft jaw having a second holding surface, and a first holding surface having a higher hardness than a hardness of the second holding surface; a step of attaching a workpiece to the chuck soft jaw that is supported by a chuck main body of a first workpiece holder so as to be movable in a first direction away from a center axis of the chuck main body and in a second direction toward the center axis; a step of cutting a first portion of the workpiece with an oxidized surface of the workpiece being held by the first holding surface of the chuck soft jaw; and a step of machining a second portion of the workpiece with a machined surface of the workpiece that has been formed by cutting the oxidized surface of the workpiece being held by the second holding surface of the chuck soft jaw.

In some embodiments, the hybrid machine tool includes: a plurality of processing units configured to make a chuck soft jaw from a raw material block attached to a chuck main body, the chuck soft jaw including a first holding surface configured to hold an oxidized surface of a workpiece and a second holding surface configured to hold a machined surface of the workpiece; a first workpiece holder configured to hold the workpiece via the chuck soft jaw; and a controller configured to control the plurality of processing units and the first workpiece holder. The first workpiece holder includes the chuck main body configured to support the chuck soft jaw having the first holding surface and the second holding surface, a first drive unit configured to move the chuck soft jaw in a first direction away from a center axis of the chuck main body and in a second direction toward the center axis, and a rotary drive unit configured to rotate the chuck main body about the center axis. The plurality of processing units includes a first processing unit configured to form the second holding surface on the raw material block by cutting the raw material block attached to the chuck main body, and a second processing unit configured to form the first holding surface having a higher hardness than a hardness of the second holding surface on the raw material block by processing the raw material block attached to the chuck main body.

### Effects of Invention

The present invention can provide a chuck soft jaw, a chuck soft jaw making method, a workpiece machining method, and a hybrid machine tool.

### Brief Description of Drawings

[FIG. 1] FIG. 1 is a schematic cross-sectional diagram illustrating a chuck soft jaw supported on a chuck main body in a first embodiment.
[FIG. 2] FIG. 2 is a schematic cross-sectional diagram illustrating the chuck soft jaw supported on the chuck main body in the first embodiment.
[FIG. 3] FIG. 3 is a schematic cross-sectional diagram illustrating the chuck soft jaw supported on the chuck main body in the first embodiment.
[FIG. 4] FIG. 4 is a schematic cross-sectional diagram illustrating the chuck soft jaw in the first embodiment.
[FIG. 5] FIG. 5 is a schematic cross-sectional diagram illustrating the chuck soft jaw supported on the chuck main body in a first modification of the first embodiment.
[FIG. 6] FIG. 6 is a schematic cross-sectional diagram illustrating the chuck soft jaw supported on the chuck main body in the first modification of the first embodiment.
[FIG. 7] FIG. 7 is a schematic cross-sectional diagram illustrating the chuck soft jaw in the first modification of the first embodiment.
[FIG. 8] FIG. 8 is a schematic perspective diagram illustrating the chuck soft jaw in the first modification of the first embodiment.
[FIG. 9] FIG. 9 is a schematic cross-sectional diagram illustrating the chuck soft jaw supported on the chuck main body in a second modification of the first embodiment.
[FIG. 10] FIG. 10 is a schematic cross-sectional diagram illustrating the chuck soft jaw supported on the chuck main body in the second modification of the first embodiment.
[FIG. 11] FIG. 11 is a schematic cross-sectional diagram illustrating the chuck soft jaw supported on the chuck main body in a third modification of the first embodiment.
[FIG. 12] FIG. 12 is a schematic cross-sectional diagram illustrating the chuck soft jaw supported on the chuck main body in a fourth modification of the first embodiment.
[FIG. 13] FIG. 13 is a schematic cross-sectional diagram illustrating a state after an attachment step has been carried out.
[FIG. 14] FIG. 14 is a schematic cross-sectional diagram illustrating a raw material block being cut by a cutting tool.
[FIG. 15] FIG. 15 is a schematic cross-sectional diagram illustrating how a first holding surface is formed on the raw material block.
[FIG. 16] FIG. 16 is a schematic cross-sectional diagram illustrating how a second holding surface is formed on the raw material block.
[FIG. 17] FIG. 17 is a schematic cross-sectional diagram illustrating a raw material block being cut by a cutting tool in a modification of a chuck soft jaw making method.
[FIG. 18] FIG. 18 is a schematic cross-sectional diagram illustrating how the first holding surface is formed on the raw material block in a modification of the chuck soft jaw making method.
[FIG. 19] FIG. 19 is a schematic cross-sectional diagram illustrating how concavity and convexity are formed on the first holding surface.
[FIG. 20] FIG. 20 is a schematic cross-sectional diagram illustrating how the second holding surface is formed on the raw material block in a modification of the chuck soft jaw making method.
[FIG. 21] FIG. 21 is a flowchart showing an example method of making the chuck soft jaw in the first embodiment.
[FIG. 22] FIG. 22 is a schematic diagram illustrating a state after a workpiece has been attached to the chuck soft jaw.
[FIG. 23] FIG. 23 is a schematic diagram illustrating how a first portion of the workpiece is cut with the workpiece being held by the first holding surface of the chuck soft jaw.
[FIG. 24] FIG. 24 is a schematic diagram illustrating the workpiece being transferred from a first workpiece holder to a second workpiece holder.
[FIG. 25] FIG. 25 is a schematic diagram illustrating the workpiece being transferred from the first workpiece holder to the second workpiece holder.
[FIG. 26] FIG. 26 is a schematic diagram illustrating how an oxidized surface of the workpiece is cut with the workpiece being held by the second workpiece holder.
[FIG. 27] FIG. 27 is a schematic diagram illustrating the workpiece being transferred from the second workpiece holder to the first workpiece holder.
[FIG. 28] FIG. 28 is a schematic diagram illustrating how a second portion of the workpiece is machined with the workpiece being held by the second holding surface of the chuck soft jaw.
[FIG. 29] FIG. 29 is a flowchart showing an example of a workpiece machining method in the first embodiment.
[FIG. 30] FIG. 30 is a schematic diagram illustrating a workpiece being machined in a first modification of the workpiece machining method.
[FIG. 31] FIG. 31 is a diagram illustrating a workpiece being ground by a grinding tool.
[FIG. 32] FIG. 32 is a schematic diagram illustrating a workpiece being machined in a second modification of the workpiece machining method.
[FIG. 33] FIG. 33 is a schematic diagram illustrating a workpiece being machined in a third modification of the workpiece machining method.
[FIG. 34] FIG. 34 is a schematic diagram illustrating a workpiece being machined in a fourth modification of the workpiece machining method.
[FIG. 35] FIG. 35 is a flowchart showing another example of the workpiece machining method in the first embodiment.
[FIG. 36] FIG. 36 is a schematic perspective diagram illustrating a hybrid machine tool in the first embodiment.
[FIG. 37] FIG. 37 is a schematic perspective diagram illustrating the hybrid machine tool in the first embodiment.
[FIG. 38] FIG. 38 is a schematic perspective diagram illustrating the hybrid machine tool in the first modification of the first embodiment.
[FIG. 39] FIG. 39 is a schematic perspective diagram illustrating the hybrid machine tool in the first modification of the first embodiment.
[FIG. 40] FIG. 40 is a diagram illustrating how a controller is able to send control commands to a plurality of control targets.
[FIG. 41] FIG. 41 is a diagram illustrating how the controller is able to send control commands to a plurality of control targets.
[FIG. 42] FIG. 42 is a diagram illustrating how the controller is able to send control commands to a plurality of control targets.

### Description of Embodiments

Hereinafter, a chuck soft jaw 1, a chuck soft jaw making method, a workpiece machining method, and a hybrid machine tool 2 in one embodiment will be described with reference to the drawings. In the following description of the embodiment, parts and components that have identical functions are given the same reference numerals, and repetitive descriptions of these parts and components with the same reference numerals will be omitted.

### (Definition of directions)

A "first direction DR1" is defined herein as the direction away from a first axis AX, which is the center axis of a chuck main body 31 of a first workpiece holder 3. A "second direction DR2" is defined herein as the direction toward the first axis AX, which is the center axis of the chuck main body 31 of the first workpiece holder 3.

A "third direction DR3" is defined herein as the direction from the chuck main body 31 toward the chuck soft jaw 1 along the center axis of the chuck main body 31 of the first workpiece holder 3. A "fourth direction DR4" is defined as the direction opposite to the third direction DR3.

The center axis of the chuck main body 31 of the first workpiece holder 3 will be referred to as the "first axis AX" in the following description. The center axis of a second chuck main body 41 of a second workpiece holder 4 will be referred to as the "second axis AT."

### (Chuck soft jaw 1)

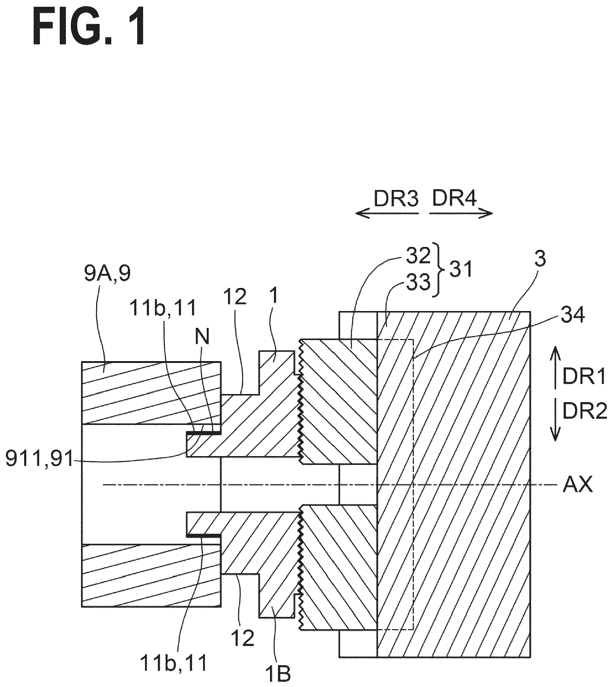

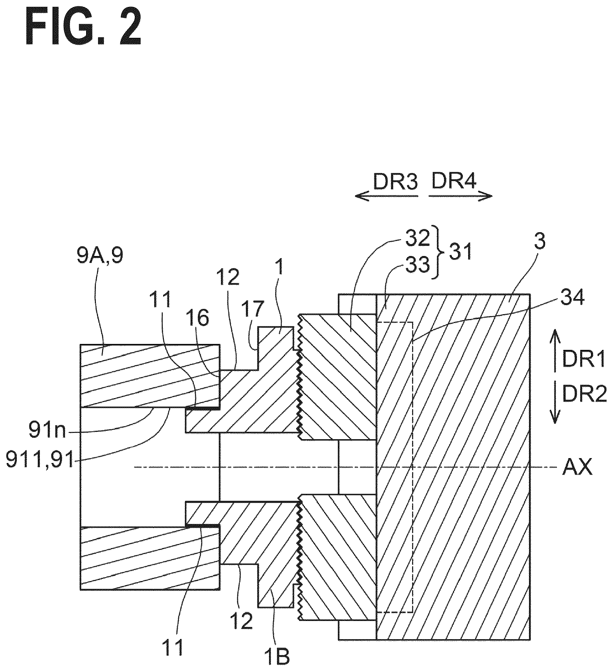

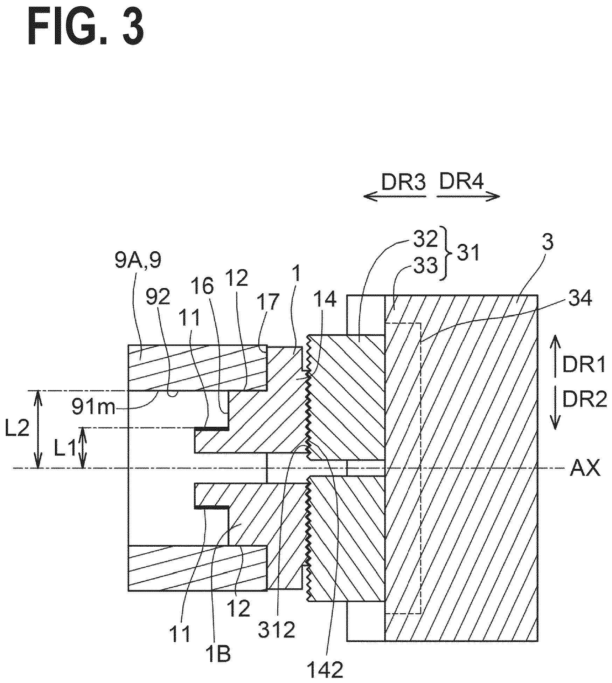

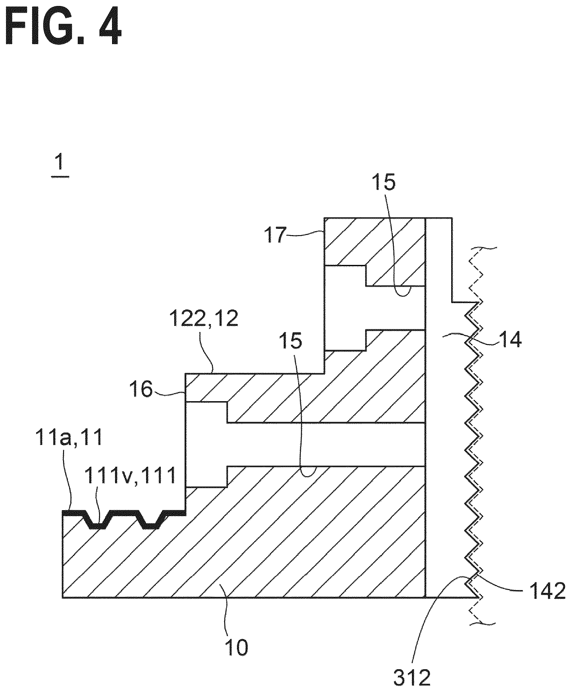

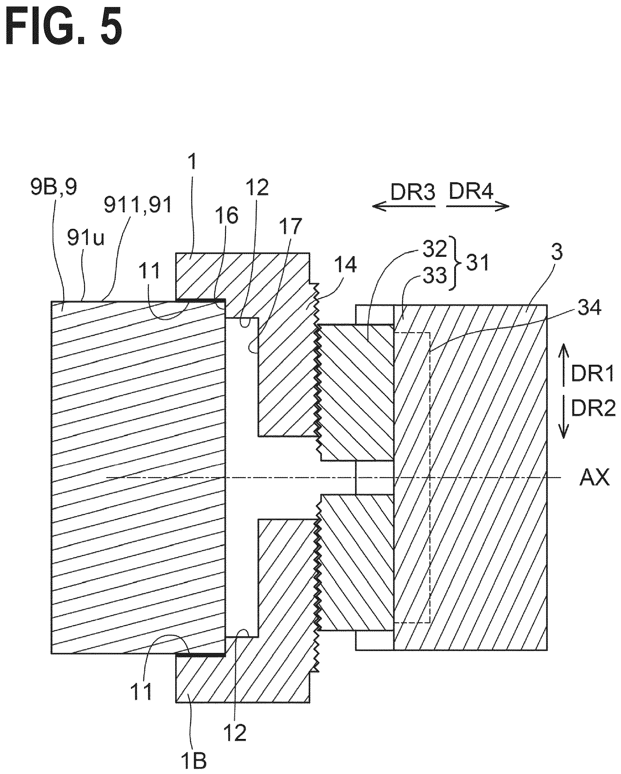

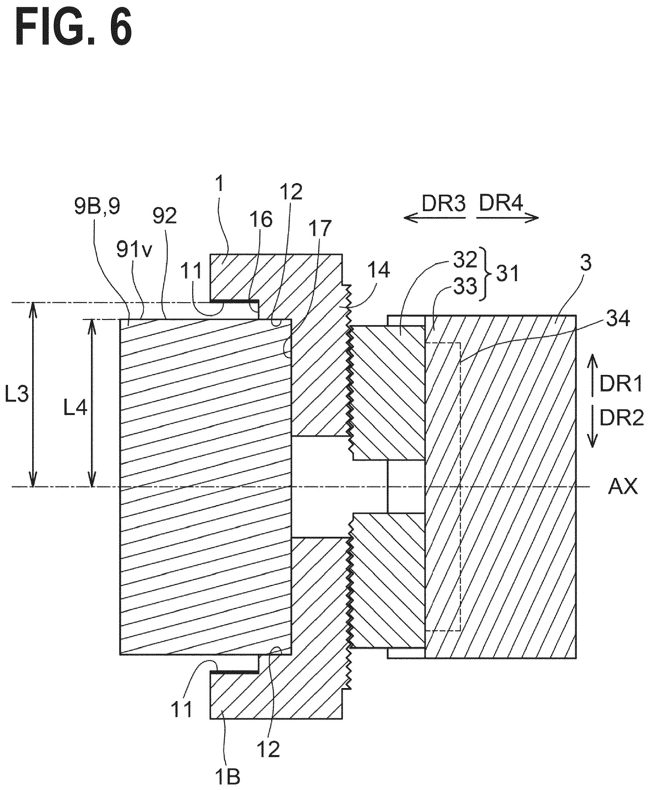

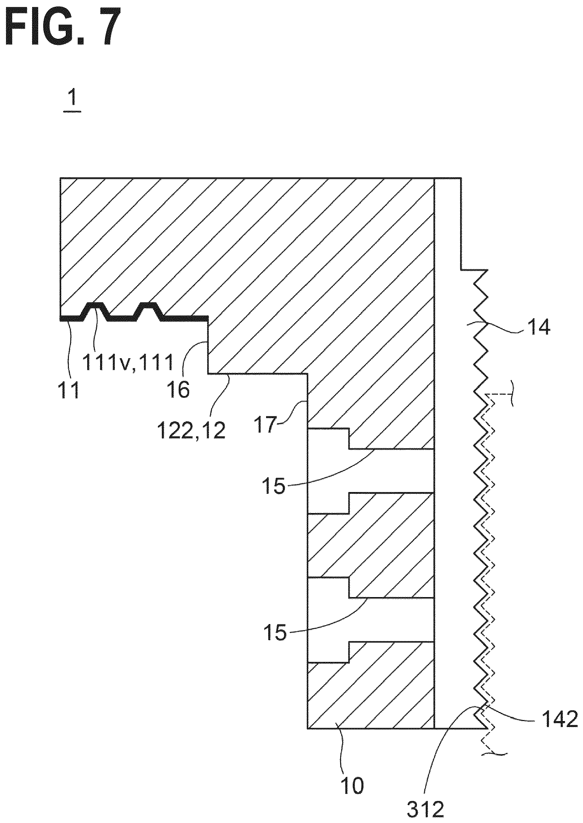

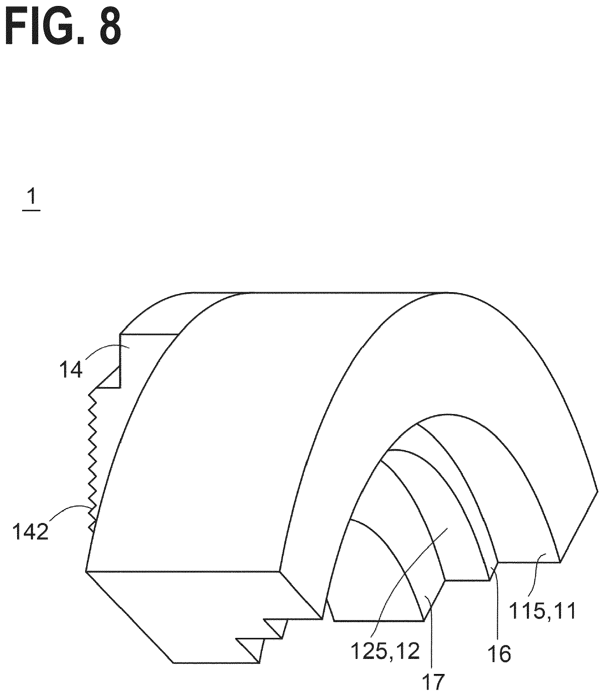

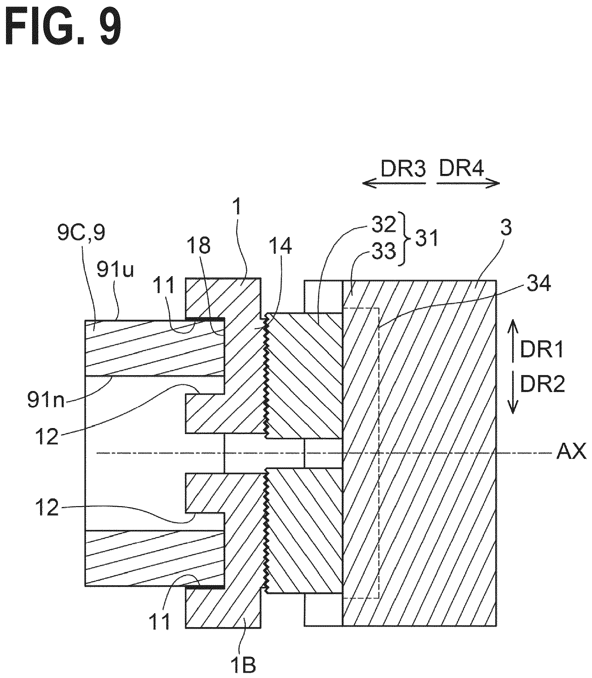

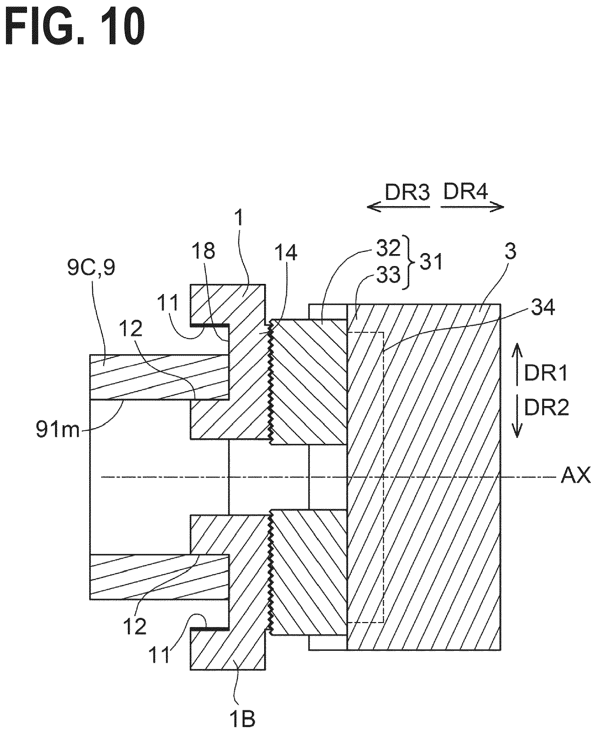

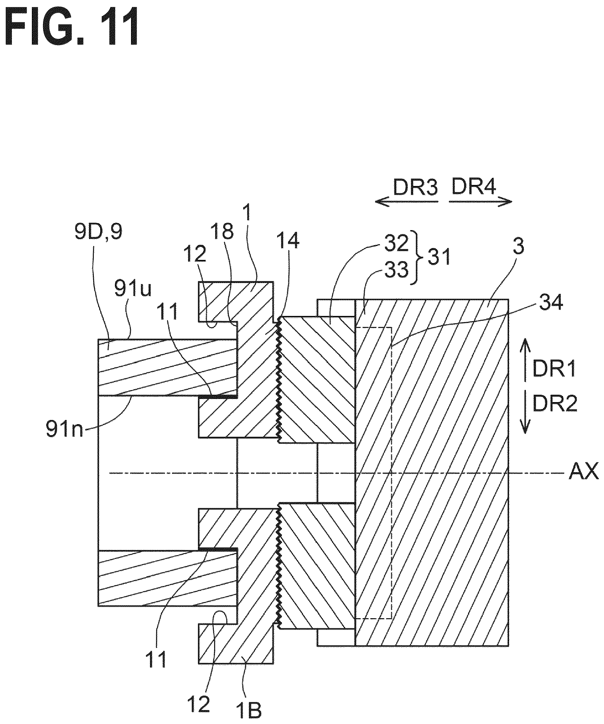

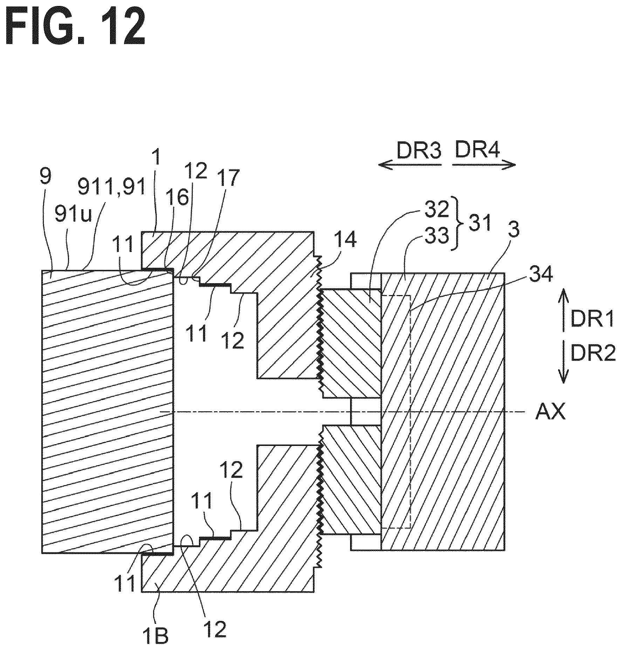

The chuck soft jaw 1 in the first embodiment will be described with reference to FIG. 1 to FIG. 12. FIG. 1 to FIG. 3 are schematic cross-sectional diagrams illustrating the chuck soft jaw 1 in the first embodiment supported on the chuck main body 31. FIG. 2 shows how a workpiece 9A is held by the first holding surface 11 of the chuck soft jaw 1, and FIG. 3 shows how the workpiece 9A is held by the second holding surface 12 of the chuck soft jaw 1. FIG. 4 is a schematic cross-sectional diagram illustrating the chuck soft jaw 1 in the first embodiment. FIG. 5 and FIG. 6 are schematic cross-sectional diagrams illustrating the chuck soft jaw 1 in a first modification of the first embodiment supported on the chuck main body 31. FIG. 5 shows how a workpiece 9B is held by the first holding surface 11 of the chuck soft jaw 1, and FIG. 6 shows how the workpiece 9B is held by the second holding surface 12 of the chuck soft jaw 1. FIG. 7 is a schematic cross-sectional diagram illustrating the chuck soft jaw 1 in the first modification of the first embodiment. FIG. 8 is a schematic perspective diagram illustrating the chuck soft jaw 1 in the first modification of the first embodiment. FIG. 9 and FIG. 10 are schematic cross-sectional diagrams illustrating the chuck soft jaw 1 in a second modification of the first embodiment supported on the chuck main body 31. FIG. 9 shows how a workpiece 9C is held by the first holding surface 11 of the chuck soft jaw 1, and FIG. 10 shows how the workpiece 9C is held by the second holding surface 12 of the chuck soft jaw 1. FIG. 11 is a schematic cross-sectional diagram illustrating the chuck soft jaw 1 in a third modification of the first embodiment supported on the chuck main body 31. FIG. 12 is a schematic cross-sectional diagram illustrating the chuck soft jaw 1 in a fourth modification of the first embodiment supported on the chuck main body 31.

As illustrated in FIG. 1, the chuck soft jaw 1 in the first embodiment is a member supported by the chuck main body 31. More specifically, the chuck soft jaw 1 is supported by the chuck main body 31 in a manner movable in the first direction DR1 away from the first axis AX that is the center axis of the chuck main body 31, and in the second direction DR2 toward the first axis AX. In the example illustrated in FIG. 1, the first direction DR1 corresponds to a radial direction away from the center axis of the chuck main body 31. The second direction DR2 is a direction opposite to the first direction DR1.

In the example illustrated in FIG. 1 and FIG. 2, the chuck main body 31 includes a movable part 32, and a base part 33 that supports this movable part 32 in a movable manner. The chuck soft jaw 1 is movable with the movable part 32 of the chuck main body 31 in the first direction DR1 away from the first axis AX that is the center axis of the chuck main body 31. The chuck soft jaw 1 is also movable with the movable part 32 of the chuck main body 31 in the second direction DR2 toward the first axis AX that is the center axis of the chuck main body 31.

As illustrated in FIG. 2, the chuck soft jaw 1 includes a first holding surface 11 that is able to hold a first surface 91 of the workpiece 9A (e.g., an oxidized surface 911 of the workpiece 9A). As illustrated in FIG. 3, the chuck soft jaw 1 also includes a second holding surface 12 that is able to hold a machined surface 92 of the workpiece 9A. The first holding surface 11 has a higher hardness than a hardness of the second holding surface 12.

The chuck soft jaw 1 may be made of steel, or any other materials. In the case where the second holding surface 12 is made of steel, the first holding surface 11 may be made of a high-hardness steel (e.g., steel containing martensite phase) having higher hardness than the steel forming the second holding surface 12. Alternatively, the first holding surface 11 may be made of other metal materials (e.g., titanium) having higher hardness than the steel forming the second holding surface 12.

In the example illustrated in FIG. 2 and FIG. 3, the chuck soft jaw 1 includes the first holding surface 11 having a suitable hardness for holding the first surface 91 of the workpiece 9A (more specifically, first holding surface 11 having a relatively high hardness), and a second holding surface 12 having a suitable hardness for holding the machined surface 92 of the workpiece 9A (more specifically, second holding surface 12 having a relatively low hardness).

Therefore, when a machining operation in which the first surface 91 of the workpiece 9A is held by the chuck soft jaw 1, and a machining operation in which the machined surface 92 of the workpiece 9A is held by the chuck soft jaw 1, are both performed, there is no need to change the jaws supported on the chuck main body 31 (more specifically, there is no need to change the jaw supported on the chuck main body 31 from a hard jaw to a soft jaw). Accordingly, in the case where the chuck soft jaw 1 of the first embodiment is used, the time required to change the jaws is saved, thus reducing the time required to machine the workpiece 9A.

### (Optional or additional configurations)

Next, some optional or additional configurations that may be adopted in the chuck soft jaw 1 in the first embodiment will be described with reference to FIG. 1 to FIG. 12.

### (First holding surface 11)

In the example illustrated in FIG. 2, the first holding surface 11 is a surface that holds, for example, an oxidized surface 911 of the workpiece 9A. The oxidized surface 911 of the workpiece 9A has fine concavity and convexity. To prevent slippage between the oxidized surface 911 with concavity and convexity and the first holding surface 11, the oxidized surface 911 needs to be firmly held by the first holding surface 11. A relatively high hardness on the first holding surface 11 prevents it from being damaged by the oxidized surface 911 that makes tight contact with the first holding surface 11. The chuck soft jaw 1 can thus have improved durability and longer service life.

As illustrated in FIG. 4, the first holding surface 11 may include concavity and convexity 111. More specifically, the first holding surface 11 may include spike-like protrusions or grooves 111v. Such concavity and convexity 111 enhance the gripping properties of the first holding surface 11 on the oxidized surface 911 of the workpiece 9A. Alternatively, the first holding surface 11 may be a smooth surface (in other words, surface without concavity and convexity).

In the example illustrated in FIG. 4, the first holding surface 11 is a surface formed by heat treatment. More specifically, the first holding surface 11 is a surface 11a formed by a quenching process. The quenching process is performed by irradiating the surface of the material forming the chuck soft jaw 1 with a laser beam, for example. The material forming the chuck soft jaw 1 is steel, for example.

Alternatively, as illustrated in FIG. 1, the first holding surface 11 may be a metal layering surface 11b. The metal layering surface 11b is formed by cladding a metal material N having a higher hardness than a hardness of the material forming the raw material block on a surface of the material forming the raw material block of the chuck soft jaw 1.

### (Second holding surface 12)

In the example illustrated in FIG. 3, the second holding surface 12 is a surface that holds the machined surface 92 of the workpiece 9A. The machined surface 92 of the workpiece 9A is relatively smooth as compared to the oxidized surface 911 of the workpiece 9A (see FIG. 2). A relatively low hardness on the second holding surface 12 prevents the machined surface 92 of the workpiece 9A from being damaged by the second holding surface 12.

In the example illustrated in FIG. 4, the second holding surface 12 is a machined surface 122 formed by a cutting process. A cutting process can finish the second holding surface 12 as a smooth surface. In this case, the machined surface 92 of the workpiece 9A held by the second holding surface 12 is prevented even more effectively from being damaged by the second holding surface 12. In the example illustrated in FIG. 4, the second holding surface 12 is a smooth surface (in other words, surface without grooves, protrusions and the like).

In the example illustrated in FIG. 4, the first holding surface 11 and second holding surface 12 are positioned on a single one-piece block part 10. Therefore, in the example illustrated in FIG. 4, there is no need to join together the parts where the first holding surface 11 and second holding surface 12 are each positioned, using a fastening member such as a bolt.

### (Base portion 14 of chuck soft jaw 1)

In the example illustrated in FIG. 4, the chuck soft jaw 1 includes a base portion 14 that is attached to the chuck main body 31. The base portion 14 may have a first portion 142 with concavity and convexity that engages with a second portion 312 with concavity and convexity formed on the chuck main body 31. In the example illustrated in FIG. 3, the attachment position of the chuck soft jaw 1 relative to the movable part 32 of the chuck main body 31 is adjustable by adjusting the relative position of the first portion 142 with concavity and convexity relative to the second portion 312 with concavity and convexity. The chuck soft jaw 1 is attached to the chuck main body 31 via a fastening member such as a bolt. In the example illustrated in FIG. 4, the chuck soft jaw 1 is formed with a through hole 15 for receiving a fastening member such as a bolt.

### (Positional relationship between first holding surface 11, second holding surface 11, and base portion 14)

In the example illustrated in FIG. 3, the second holding surface 12 is positioned between the first holding surface 11 and the base portion 14 in the direction along the first axis AX.

In the example illustrated in FIG. 3, the first holding surface 11 and the second holding surface 12 are each substantially parallel to the first axis AX. The first holding surface 11 may be an arc-shaped surface with its center line coinciding with the first axis AX. The second holding surface 12 may be an arc-shaped surface with its center line coinciding with the first axis AX.

In the example illustrated in FIG. 3, the chuck soft jaw 1 includes a first step surface 16. The first step surface 16 is substantially perpendicular to the first axis AX, for example. In the example illustrated in FIG. 3, the first step surface 16 is positioned between the first holding surface 11 and the second holding surface 12 in the direction along the first axis AX. The inner edge of the first step surface 16 may be connected to the first holding surface 11. The outer edge of the first step surface 16 may be connected to the second holding surface 12.

In the example illustrated in FIG. 3, the chuck soft jaw 1 includes a second step surface 17. The second step surface 17 is substantially perpendicular to the first axis AX, for example. In the example illustrated in FIG. 3, the second step surface 17 is positioned closer to the base portion 14 than the second holding surface 12 in the direction along the first axis AX.

When the workpiece 9A is held by the second holding surface 12, the second step surface 17 may serve as a positioning surface that defines the position of the base end face of the workpiece 9A (in other words, the end face on the side in the fourth direction DR4). On the other hand, as illustrated in FIG. 2, when the workpiece 9A is held by the first holding surface 11, the first step surface 16 may serve as a positioning surface that defines the position of the base end face of the workpiece 9A.

In the example illustrated in FIG. 2, the first holding surface 11 is a surface that holds an inner surface 91n of the workpiece 9A (more specifically, an inner circumferential surface of the workpiece 9A). In the example illustrated in FIG. 3, the second holding surface 12 is a surface that holds a surface 91m that was formed by cutting the inner surface 91n of the workpiece 9A (more specifically, a surface formed by cutting an inner circumferential surface of the workpiece 9A).

In the example illustrated in FIG. 3, the distance L2 between the first axis AX and the second holding surface 12 is larger than the distance L between the first axis AX and the first holding surface 11.

### (First modification of chuck soft jaw)

The positions of the first holding surface 11 and the second holding surface 12 of the chuck soft jaw 1 are not limited to the example shown in FIG. 2 to FIG. 4. A first modification of the chuck soft jaw 1 will be described with reference to FIG. 5 to FIG. 8.

In the example illustrated in FIG. 5, the second holding surface 12 is positioned between the first holding surface 11 and the base portion 14 in the direction along the first axis AX. In the example illustrated in FIG. 5, the first holding surface 11 and the second holding surface 12 are each substantially parallel to the first axis AX.

In the example illustrated in FIG. 5, the chuck soft jaw 1 includes the first step surface 16. The first step surface 16 is substantially perpendicular to the first axis AX, for example. In the example illustrated in FIG. 5, the first step surface 16 is positioned between the first holding surface 11 and the second holding surface 12 in the direction along the first axis AX. The outer edge of the first step surface 16 may be connected to the first holding surface 11. The inner edge of the first step surface 16 may be connected to the second holding surface 12.

In the example illustrated in FIG. 5, the chuck soft jaw 1 includes the second step surface 17. The second step surface 17 is substantially perpendicular to the first axis AX, for example. In the example illustrated in FIG. 5, the second step surface 17 is positioned closer to the base portion 14 than the second holding surface 12 in the direction along the first axis AX.

As illustrated in FIG. 5, when the workpiece 9B is held by the first holding surface 11, the first step surface 16 may serve as a positioning surface that defines the position of the base end face of the workpiece 9B (in other words, the end face on the side in the fourth direction DR4). On the other hand, as illustrated in FIG. 6, when the workpiece 9B is held by the second holding surface 12, the second step surface 17 may serve as a positioning surface that defines the position of the base end face of the workpiece 9B.

In the example illustrated in FIG. 5, the first holding surface 11 is a surface that holds an outer surface 91u of the workpiece 9B (more specifically, an outer circumferential surface of the workpiece 9B). In the example illustrated in FIG. 6, the second holding surface 12 is a surface that holds a surface 91v that was formed by cutting the outer surface 91u of the workpiece 9B (more specifically, a surface formed by cutting an outer circumferential surface of the workpiece 9B).

In the example illustrated in FIG. 6, the distance L4 between the first axis AX and the second holding surface 12 is smaller than the distance L3 between the first axis AX and the first holding surface 11.

As illustrated in FIG. 8, the first holding surface 11 may be a first arc-shaped surface 115. The center line of the first arc-shaped surface 115 should preferably be coaxial with the first axis AX. As illustrated in FIG. 8, the second holding surface 12 may be a second arc-shaped surface 125. The center line of the second arc-shaped surface 125 should preferably be coaxial with the first axis AX.

### (Second modification of chuck soft jaw and third modification of chuck soft jaw)

A second modification of the chuck soft jaw 1 will be described with reference to FIG. 9 and FIG. 10, and a third modification of the chuck soft jaw 1 will be described with reference to FIG. 11.

In the example illustrated in FIG. 9, the second holding surface 12 is positioned opposite the first holding surface 11. In the example illustrated in FIG. 9, the first holding surface 11 and the second holding surface 12 are each substantially parallel to the first axis AX.

In the example illustrated in FIG. 9, the chuck soft jaw 1 includes a connecting surface 18 that connects the first holding surface 11 and the second holding surface 12. The connecting surface 18 is substantially perpendicular to the first axis AX, for example. The outer edge of the connecting surface 18 may be connected to the first holding surface 11. The inner edge of the connecting surface 18 may be connected to the second holding surface 12. Alternatively, as illustrated in FIG. 11, the inner edge of the connecting surface 18 may be connected to the first holding surface 11, and the outer edge of the connecting surface 18 may be connected to the second holding surface 12.

As illustrated in FIG. 9, when the workpiece 9C is held by the first holding surface 11, the connecting surface 18 may serve as a positioning surface that defines the position of the base end face of the workpiece 9C (in other words, the end face on the side in the fourth direction DR4). On the other hand, as illustrated in FIG. 10, when the workpiece 9C is held by the second holding surface 12, the connecting surface 18 may serve as a positioning surface that defines the position of the base end face of the workpiece 9C.

In the example illustrated in FIG. 9, the first holding surface 11 is a surface that holds an outer surface 91u of the workpiece 9C (more specifically, an outer circumferential surface of the workpiece 9C). In the example illustrated in FIG. 10, the second holding surface 12 is a surface that holds a surface 91m that was formed by cutting the inner surface 91n of the workpiece 9C (more specifically, a surface formed by cutting an inner circumferential surface of the workpiece 9C).

Alternatively, as illustrated in FIG. 11, the first holding surface 11 may be a surface that holds an inner surface 91n of the workpiece 9D (more specifically, an inner circumferential surface of the workpiece 9D). The second holding surface 12 may be a surface that holds a surface that was formed by cutting the outer surface 91u of the workpiece 9D (more specifically, a surface formed by cutting an outer circumferential surface of the workpiece 9D).

### (Fourth modification of chuck soft jaw)

A fourth modification of the chuck soft jaw 1 will be described with reference to FIG. 12. In the example illustrated in FIG. 1 to FIG. 11, the chuck soft jaw 1 has one first holding surface 1, and one second holding surface 12. Alternatively, as illustrated in FIG. 12, the chuck soft jaw 1 may include a plurality of first holding surfaces 11. As illustrated in FIG. 12, the chuck soft jaw 1 may include a plurality of second holding surfaces 12. The plural first holding surfaces 11 each have a higher hardness than a hardness of each of the plural second holding surfaces 12. In the example illustrated in FIG. 12, the first holding surface 11 and second holding surface 12 alternate in the direction along the first axis AX.

### (Chuck soft jaw making method)

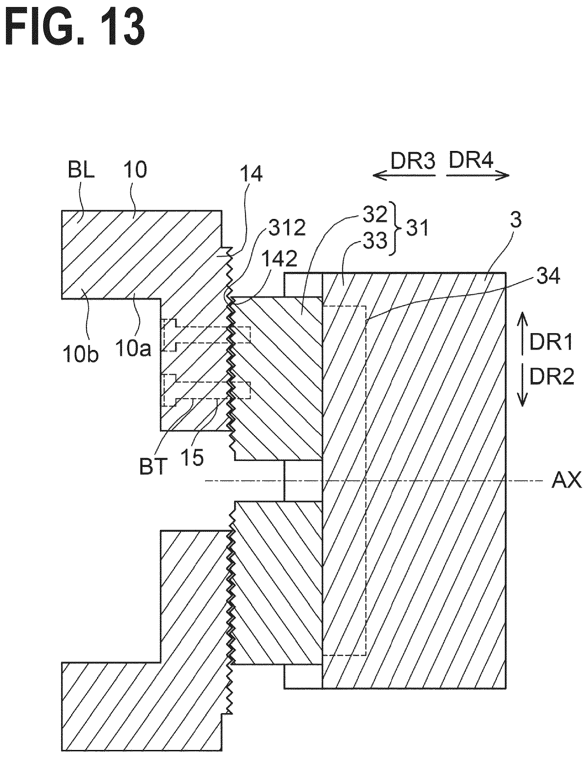

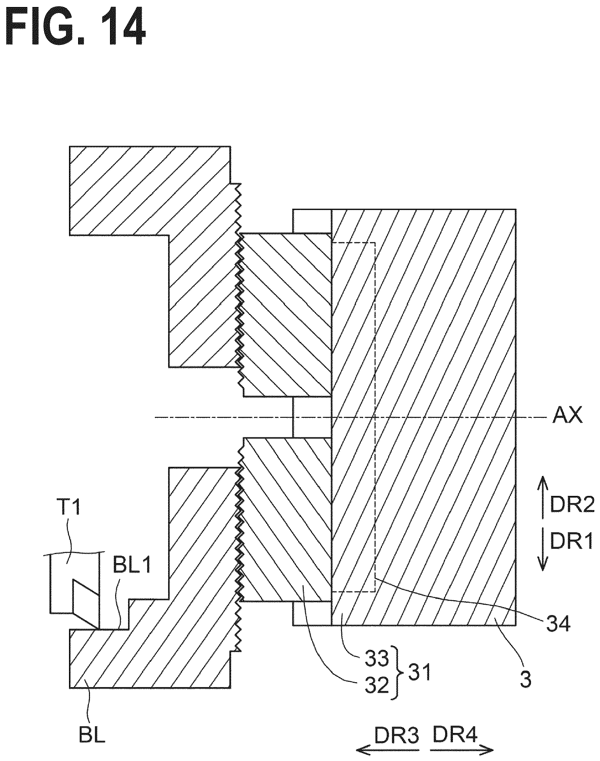

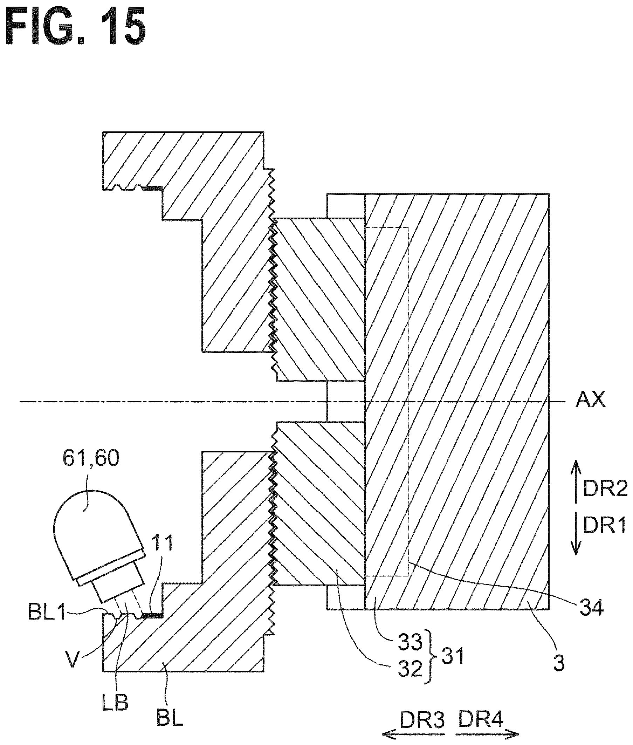

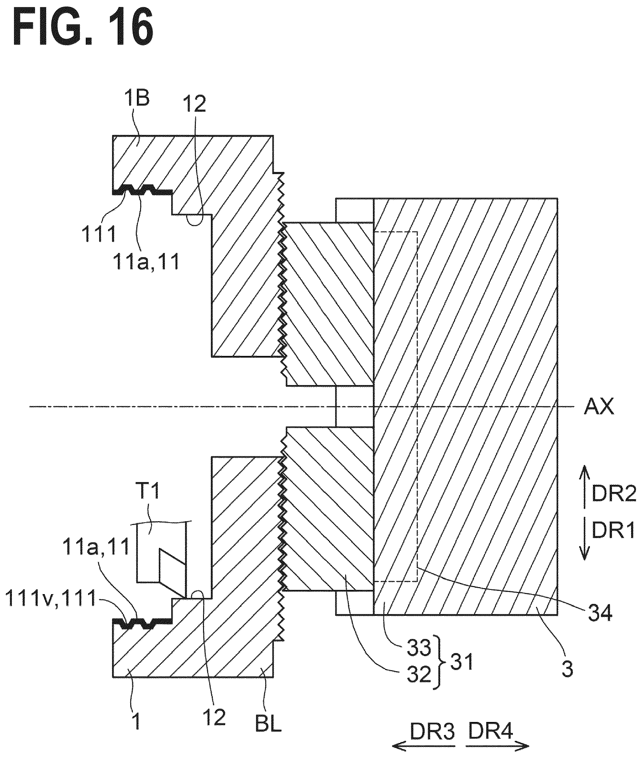

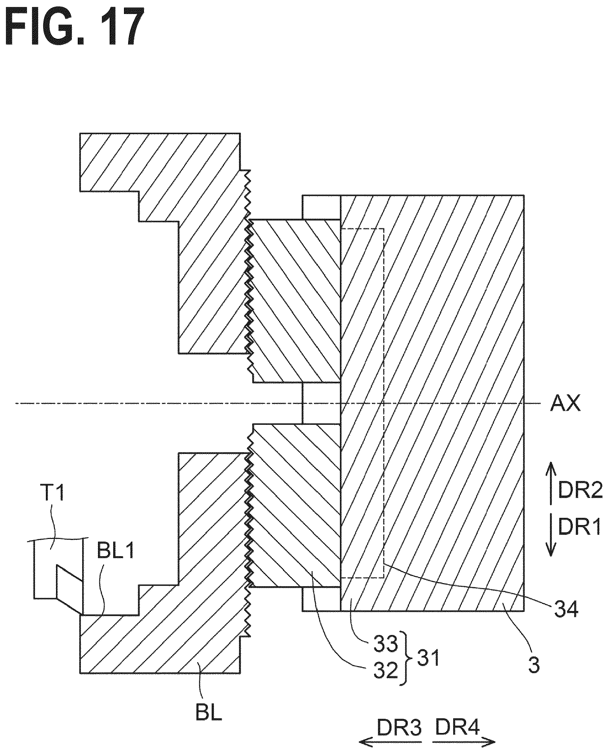

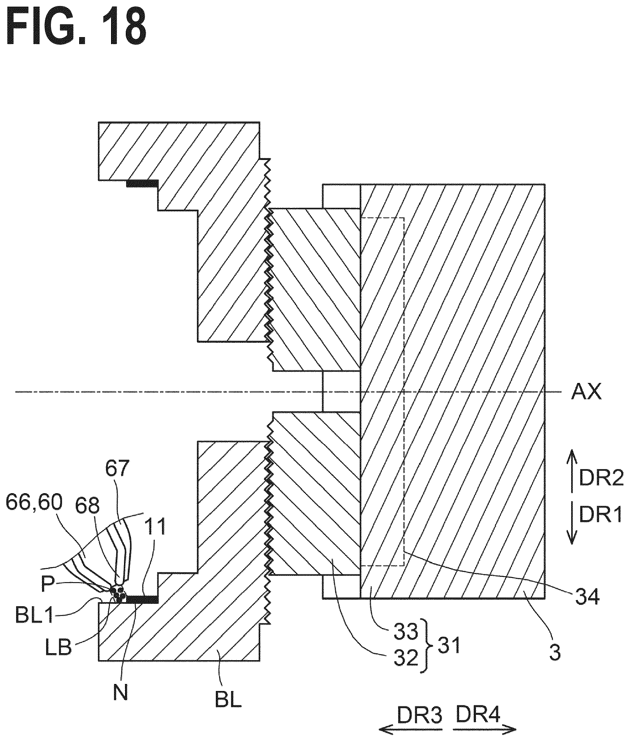

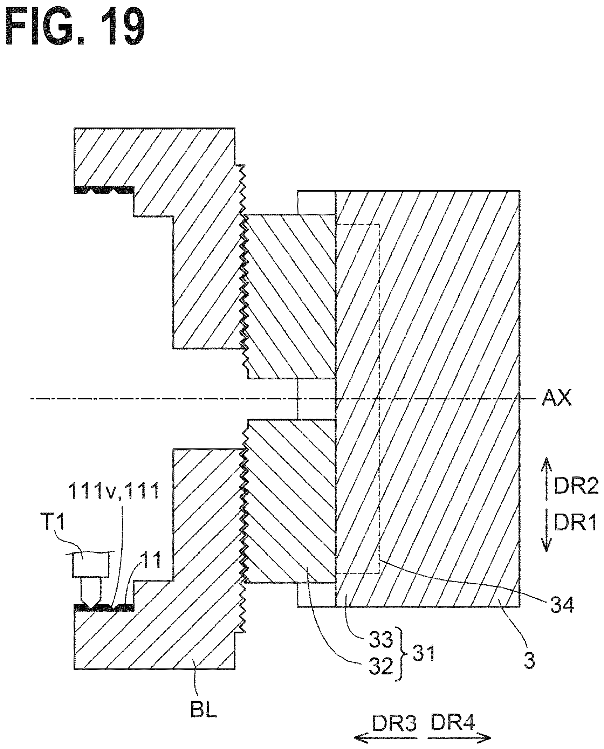

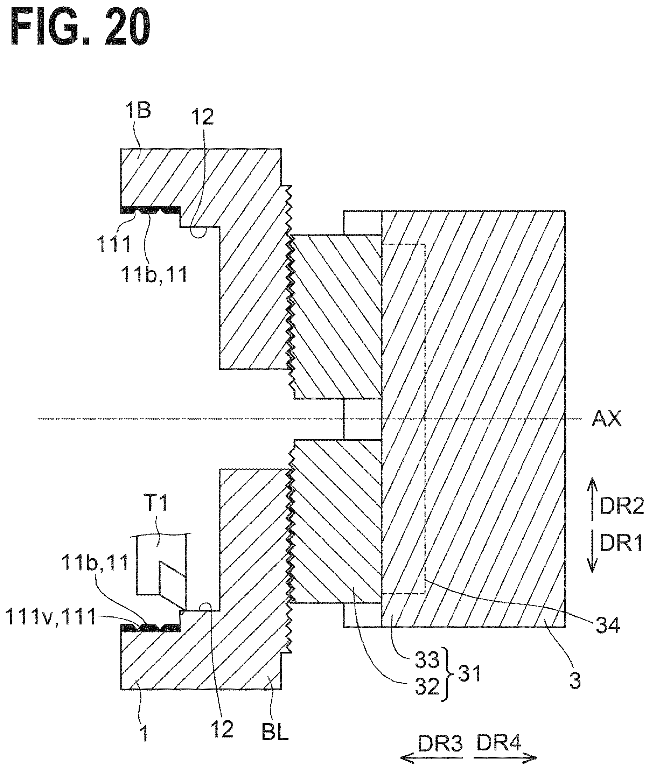

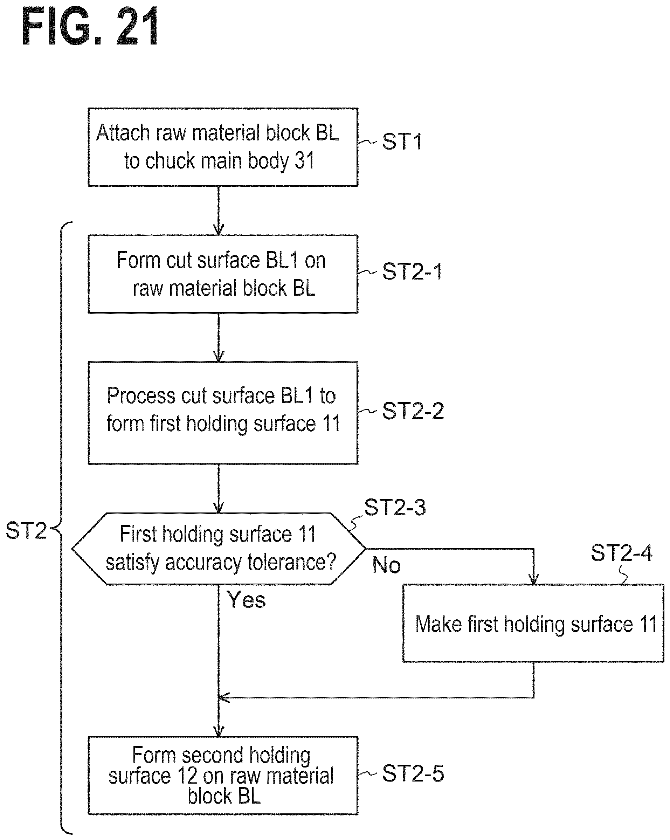

A method of making the chuck soft jaw in the first embodiment will be described with reference to FIG. 1 to FIG. 21. FIG. 13 is a schematic cross-sectional diagram illustrating a state after an attachment step has been carried out. FIG. 14 is a schematic cross-sectional diagram illustrating a raw material block BL being cut by a cutting tool T1. FIG. 15 is a schematic cross-sectional diagram illustrating how the first holding surface 11 is formed on the raw material block BL. FIG. 16 is a schematic cross-sectional diagram illustrating how the second holding surface 12 is formed on the raw material block BL. FIG. 17 is a schematic cross-sectional diagram illustrating a raw material block BL being cut by a cutting tool T1 in a modification of the chuck soft jaw making method. FIG. 18 is a schematic cross-sectional diagram illustrating how the first holding surface 11 is formed on the raw material block BL in a modification of the chuck soft jaw making method. FIG. 19 is a schematic cross-sectional diagram illustrating how concavity and convexity 111 are formed on the first holding surface 11. FIG. 20 is a schematic cross-sectional diagram illustrating how the second holding surface 12 is formed on the raw material block BL in a modification of the chuck soft jaw making method. FIG. 21 is a flowchart showing an example method of making the chuck soft jaw in the first embodiment.

The soft jaw made by the method of making the chuck soft jaw in the first embodiment may be the chuck soft jaw 1 shown in FIG. 4, or the chuck soft jaw 1 shown in FIG. 7, or the chuck soft jaw 1 shown in one of FIG. 10 to FIG. 12, or any other chuck soft jaws.

As illustrated in FIG. 13, in the first step ST1, a raw material block BL to be made into a chuck soft jaw 1 is attached to the chuck main body 31 (more specifically, the movable part 32 of the chuck main body 31). The first step is an attachment step.

The raw material block BL should preferably have a shape similar to the shape of the finished chuck soft jaw 1. The raw material block BL may be made of steel, or any other materials. In the example illustrated in FIG. 13, the raw material block BL is a single one-piece block part 10.

In the example illustrated in FIG. 13, the raw material block BL includes the base portion 14 that is attached to the chuck main body 31, an intermediate portion 10a that is supported by the base portion 14 and that is where the second holding surface 12 is to be formed, and a distal end portion 10b that is supported by the intermediate portion 10a and that is where the first holding surface 11 is to be formed. The intermediate portion 10a is positioned further in the third direction DR3 than the base portion 14, and the distal end portion 10b is positioned further in the third direction DR3 than the intermediate portion 10a.

The attachment step may include attaching the raw material block BL to the movable part 32 of the chuck main body 31 via a fastening member such as a bolt BT. The attachment step may also include engaging the first portion 142 with concavity and convexity of the raw material block BL with the second portion 312 with concavity and convexity of the chuck main body 31.

As illustrated in FIG. 14 to FIG. 16, the chuck soft jaw 1 is made from the raw material block BL in the second step ST2. The second step ST2 is a making step. In the example illustrated in FIG. 14 to FIG. 16, the making step is carried out with the raw material block BL being attached to the chuck main body 31. The making step includes a plurality of substeps.

As illustrated in FIG. 14, at substep ST2-1, the raw material block BL attached to the chuck main body 31 is cut by a cutting tool T1. Substep ST2-1 includes cutting the raw material block BL to form a cut surface BL1 that matches the shape and size of the workpiece 9 before machining. Substep ST2-1 may be carried out while the chuck main body 31 to which the raw material block BL is attached is rotating about the first axis AX.

Substep ST2-1 includes cutting the raw material block BL by the cutting tool T1 to form the cut surface BL1 on the raw material block BL. As illustrated in FIG. 15, the cut surface BL1 may include concavity and convexity (more specifically, grooves V). Alternatively, the cut surface BL1 may be a smooth surface without concavity and convexity.

In the example illustrated in FIG. 15, the first holding surface 11 is formed on the raw material block BL that is attached to the chuck main body 31 using a second processing unit 60 such as a laser irradiator 61 at substep ST2-2. Substep ST2-2 includes processing the cut surface BL1 of the raw material block BL to form thereon the first holding surface 11 having a higher hardness than a hardness of the original surface of the raw material block BL. Substep ST2-2 further includes forming the first holding surface 11 that matches the shape and size of the workpiece 9 before machining. The first holding surface 11 is a surface that is able to hold the oxidized surface 911 of the workpiece 9 (see FIG. 5 as required).

In the example illustrated in FIG. 15, the first holding surface 11 is formed on the raw material block BL that is attached to the chuck main body 31 using the laser irradiator 61 at substep ST2-2. More specifically, substep ST2-2 includes irradiating the cut surface BL1 of the raw material block BL with a laser beam LB from the laser irradiator 61. The cut surface BL1 is subjected to a heat treatment (more specifically, quenching) with the laser beam LB. This increases the hardness of the cut surface BL1, thus turning the cut surface BL1 into the first holding surface 11 with high hardness.

In the case where the cut surface BL1 has concavity and convexity, the first holding surface 11 will also have concavity and convexity.

At substep ST2-3, it is determined whether or not the formed first holding surface 11 satisfies the accuracy tolerance. This determination may be made by visual inspection, or by using a suitable testing device.

In the example illustrated in FIG. 21, when it is determined that the formed first holding surface 11 fails to satisfy the accuracy tolerance (substep ST2-3: No), the first holding surface 11 is further machined at substep ST2-4 so that it satisfies the accuracy tolerance. More specifically, the first holding surface 11 is machined by a cutting tool T1 or a grinding tool so that the formed first holding surface 11 satisfies the accuracy tolerance. When it is determined that the formed first holding surface 11 satisfies the accuracy tolerance (substep ST2-3: Yes), the process proceeds to substep ST2-5. Substep ST2-3 and substep ST2-4 may be omitted.

As illustrated in FIG. 16, at substep ST2-5, the raw material block BL attached to the chuck main body 31 is cut by a cutting tool T1. Substep ST2-5 includes cutting the raw material block BL to form the second holding surface 12 that matches the shape and size of the workpiece 9 after rough machining (more specifically, to form the second holding surface 12 that matches the shape and size of the workpiece 9 after the oxidized surface 911 has been removed).

Substep ST2-5 further includes forming the second holding surface 12 on the raw material block BL by cutting the raw material block BL. In the example illustrated in FIG. 16, the second holding surface 12 is a smooth surface (in other words, surface without grooves, protrusions and the like). Substep ST2-5 may be carried out while the chuck main body 31 to which the raw material block BL is attached is rotating about the first axis AX.

Substep ST2-5 may be performed before substep ST2-1, or after substep ST2-1, or concurrently with substep ST2-1. However, considering that the raw material block BL undergoes some thermal deformation during execution of substep ST2-2, substep ST2-5 should preferably be performed after substep ST2-1 and substep ST2-2.

### (Modification of chuck soft jaw making method)

A modification of the chuck soft jaw making method will be described with reference to FIG. 13 and FIG. 17 to FIG. 20. As illustrated in FIG. 13, in the first step ST1, the raw material block BL is attached to the chuck main body 31 (more specifically, the movable part 32 of the chuck main body 31). The first step ST1 is an attachment step. Since the attachment step has already been described, repetitive descriptions regarding the attachment step will be omitted.

As illustrated in FIG. 17 to FIG. 20, the chuck soft jaw 1 is made from the raw material block BL in the second step ST2. The second step ST2 is a making step. In the example illustrated in FIG. 17 to FIG. 20, the making step is carried out with the raw material block BL being attached to the chuck main body 31. The making step includes a plurality of substeps.

As illustrated in FIG. 17, at substep ST2-1, the raw material block BL attached to the chuck main body 31 is cut by a cutting tool T1. Substep ST2-1 includes cutting the raw material block BL to form a cut surface BL1 that substantially matches the shape and size of the workpiece 9 before machining. Substep ST2-1 may be carried out while the chuck main body 31 to which the raw material block BL is attached is rotating about the first axis AX.

Substep ST2-1 includes cutting the raw material block BL with the cutting tool T1 to form the cut surface BL1 on the raw material block BL. The cut surface BL1 may be a smooth surface without concavity and convexity. Alternatively, the cut surface BL1 may include concavity and convexity (more specifically, grooves).

In the example illustrated in FIG. 18, the first holding surface 11 is formed on the raw material block BL that is attached to the chuck main body 31 by a second processing unit 60 such as an additive processing device 66 at substep ST2-2. Substep ST2-1 includes processing the cut surface BL1 of the raw material block BL to form thereon the first holding surface 11 having a higher hardness than a hardness of the original surface of the raw material block BL. Substep ST2-2 further includes forming the first holding surface 11 that matches the shape and size of the workpiece 9 before machining. The first holding surface 11 is a surface that is able to hold the oxidized surface 911 of the workpiece 9 (see FIG. 5 as required).

In the example illustrated in FIG. 18, the first holding surface 11 is formed on the raw material block BL that is attached to the chuck main body 31 using the additive processing device 66 at substep ST2-2. More specifically, substep ST2-2 includes adding a metal material N having a higher hardness than a hardness of the raw material block BL to the cut surface BL1 of the raw material block BL using the additive processing device 66. In the example illustrated in FIG. 18, the additive processing device 66 irradiates the cut surface BL1 with a laser beam LB while supplying metal powder P to the cut surface BL1. The metal powder P heated by the energy of the laser beam LB melts and adheres to the cut surface BL1. Thus the metal material N with high hardness adheres to the cut surface BL1, forming the first holding surface 11 having a high hardness covering the cut surface BL1.

Concavity and convexity (more specifically, grooves 111v) may be formed on the first holding surface 11 after the execution of substep ST2-2. In the example illustrated in FIG. 19, concavity and convexity 111 (more specifically, grooves 111v) are formed on the first holding surface 11 by cutting the first holding surface 11 with the cutting tool T1.

At substep ST2-3, it is determined whether or not the formed first holding surface 11 satisfies the accuracy tolerance. This determination may be made by visual inspection, or by using a suitable testing device.

In the example illustrated in FIG. 21, when it is determined that the formed first holding surface 11 fails to satisfy the accuracy tolerance (substep ST2-3: No), the first holding surface 11 is further machined at substep ST2-4 so that it satisfies the accuracy tolerance. More specifically, the first holding surface 11 is machined by a cutting tool T1 or a grinding tool so that the formed first holding surface 11 satisfies the accuracy tolerance. When it is determined that the formed first holding surface 11 satisfies the accuracy tolerance (substep ST2-3: Yes), the process proceeds to substep ST2-5. Substep ST2-3 and substep ST2-4 may be omitted.

As illustrated in FIG. 20, at substep ST2-5, the raw material block BL attached to the chuck main body 31 is cut by a cutting tool T1. Substep ST2-5 includes cutting the raw material block BL to form the second holding surface 12 that matches the shape and size of the workpiece 9 after rough machining (more specifically, to form the second holding surface 12 that matches the shape and size of the workpiece 9 after the oxidized surface 911 has been removed).

Substep ST2-5 includes forming the second holding surface 12 on the raw material block BL by cutting the raw material block BL. In the example illustrated in FIG. 20, the second holding surface 12 is a smooth surface (in other words, surface without grooves, protrusions and the like). Substep ST2-5 may be carried out while the chuck main body 31 to which the raw material block BL is attached is rotating about the first axis AX.

Substep ST2-5 may be performed before substep ST2-1, or after substep ST2-1, or concurrently with substep ST2-1. However, considering that the raw material block BL undergoes some thermal deformation during execution of substep ST2-2, substep ST2-5 should preferably be performed after substep ST2-1 and substep ST2-2.

### (Workpiece machining method)

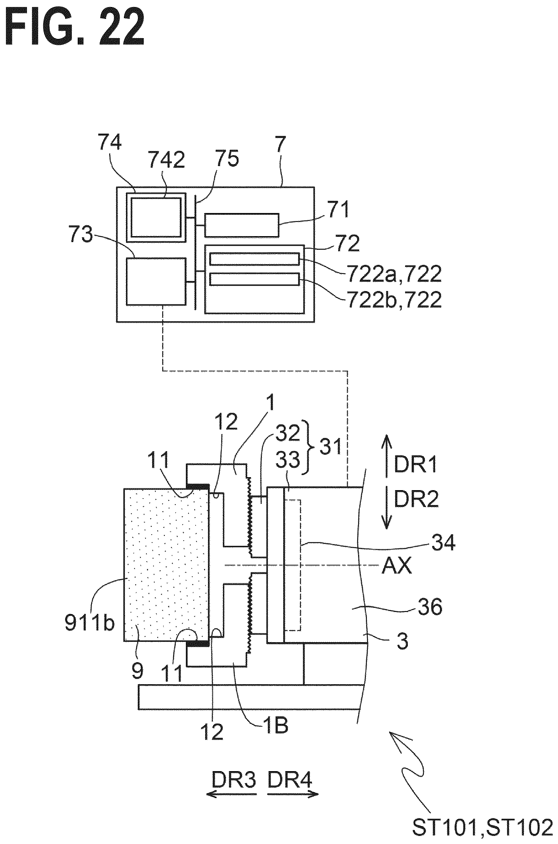

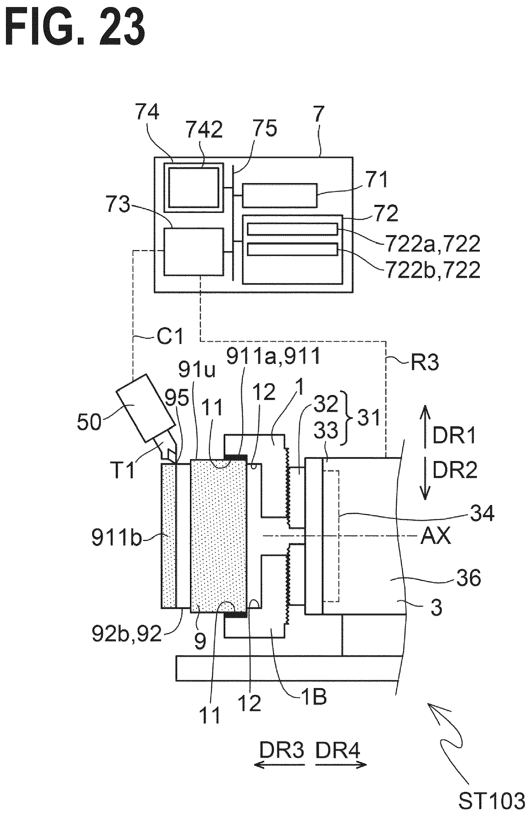

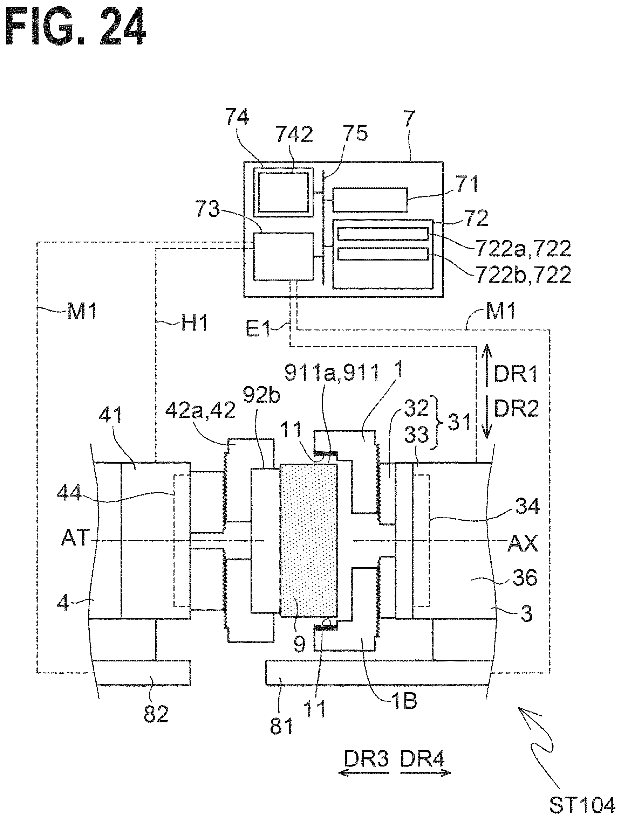

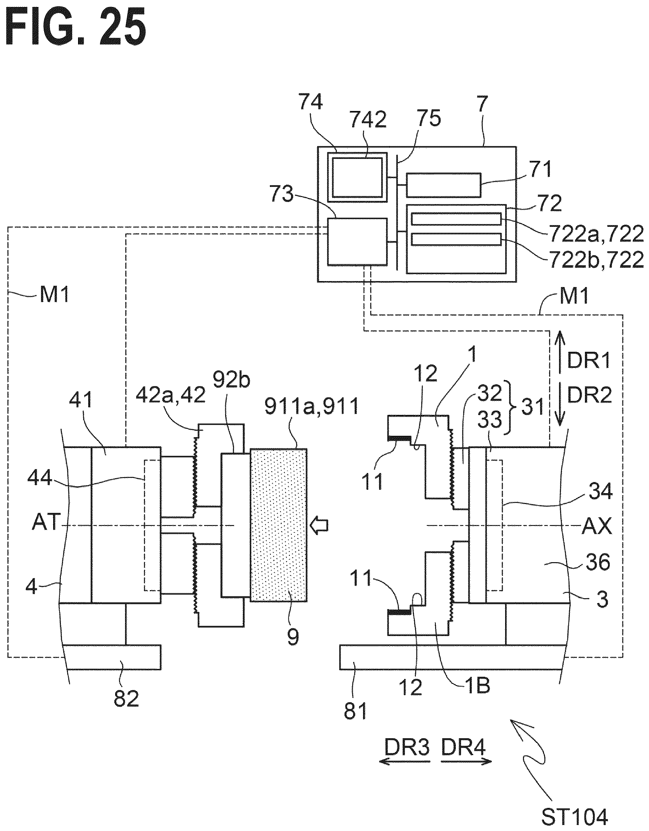

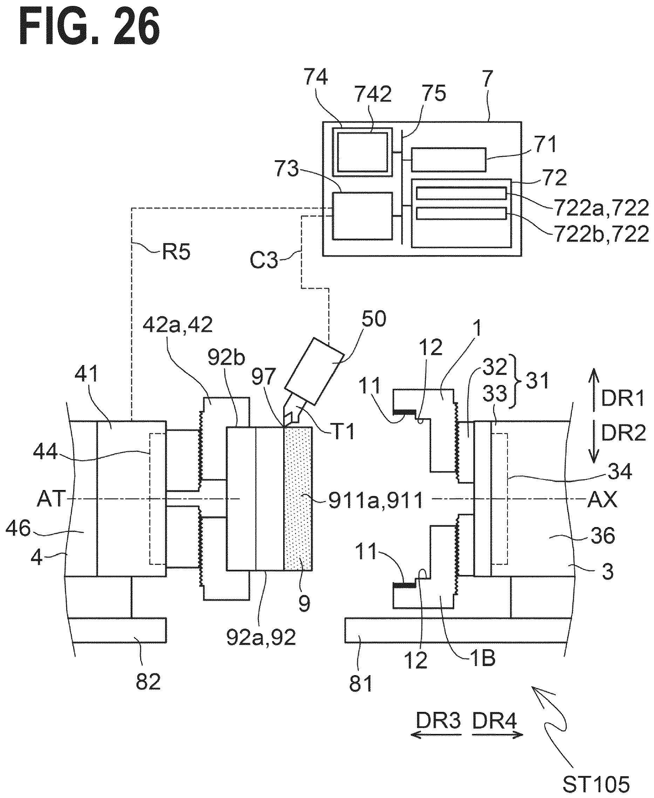

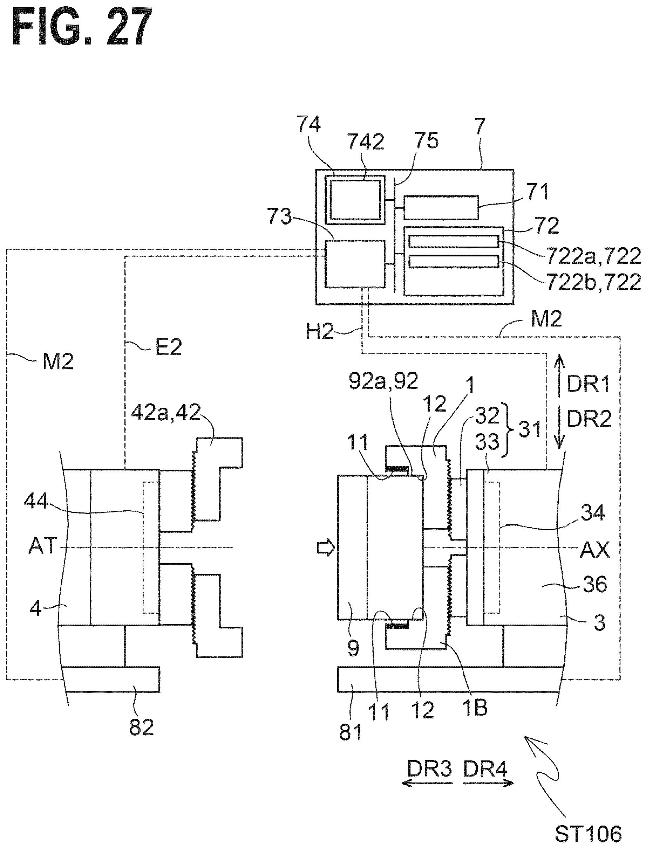

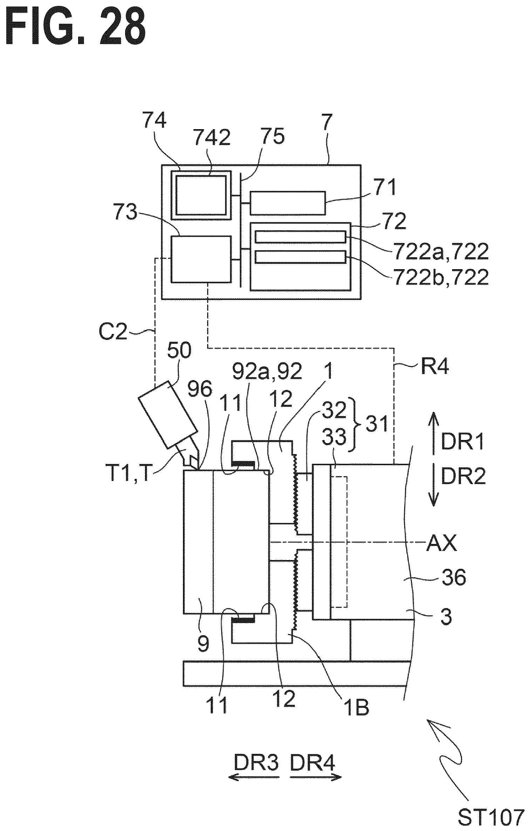

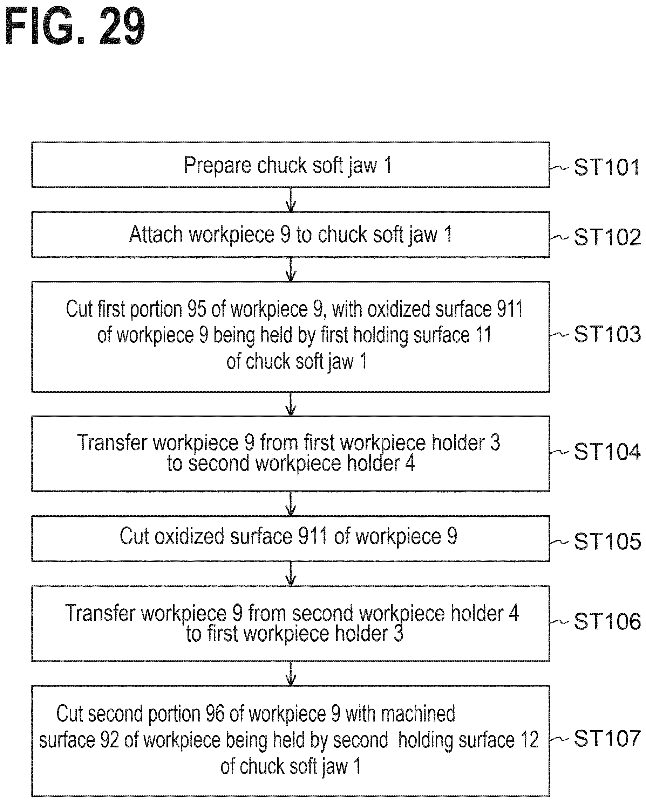

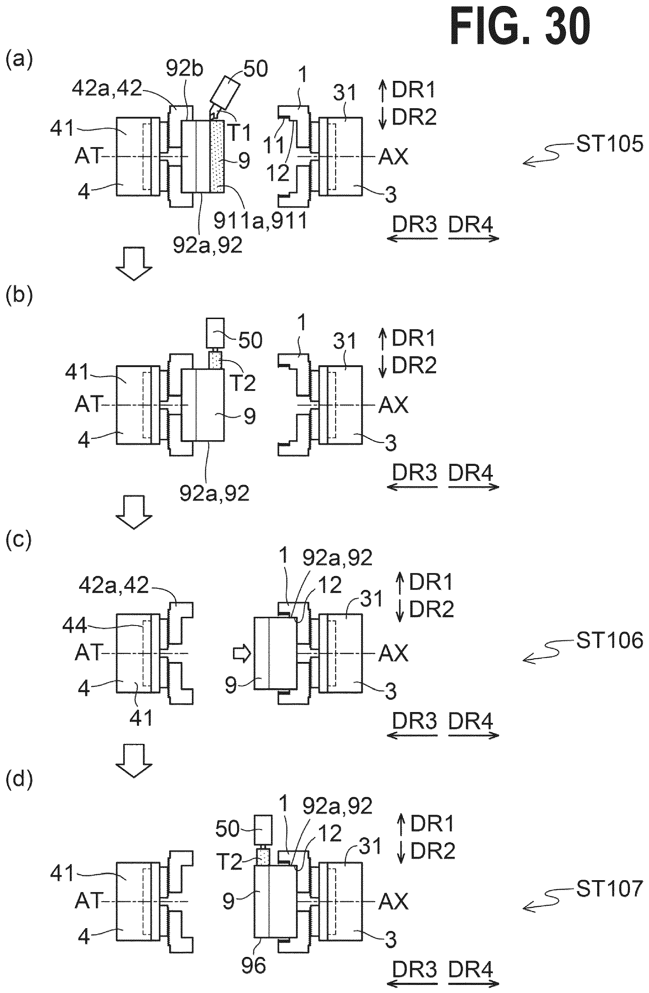

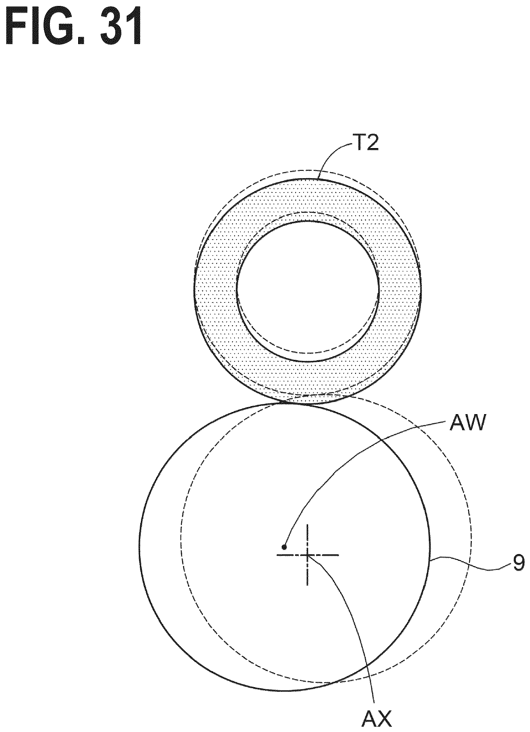

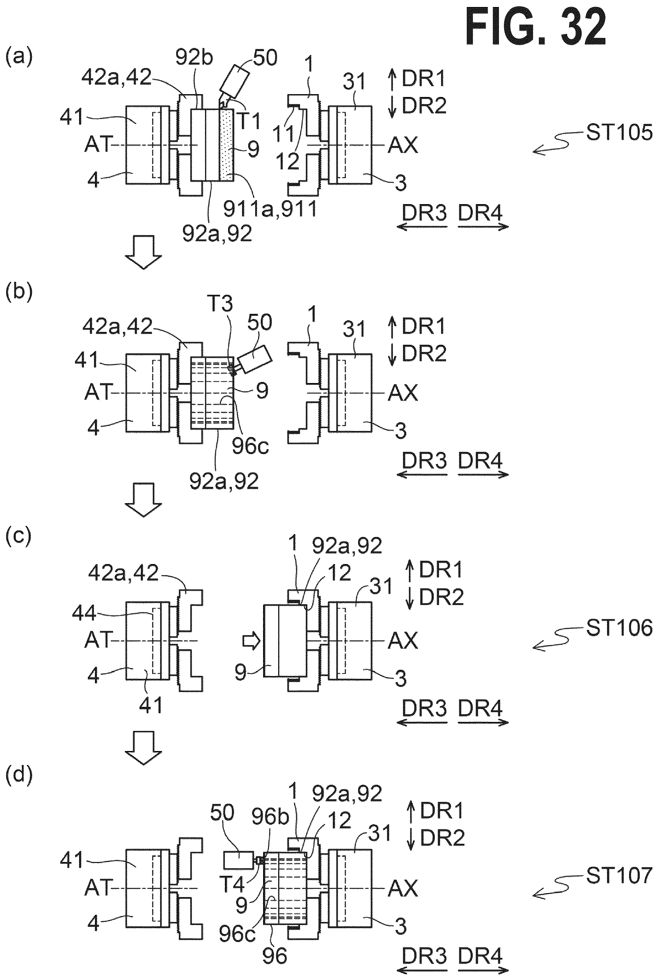

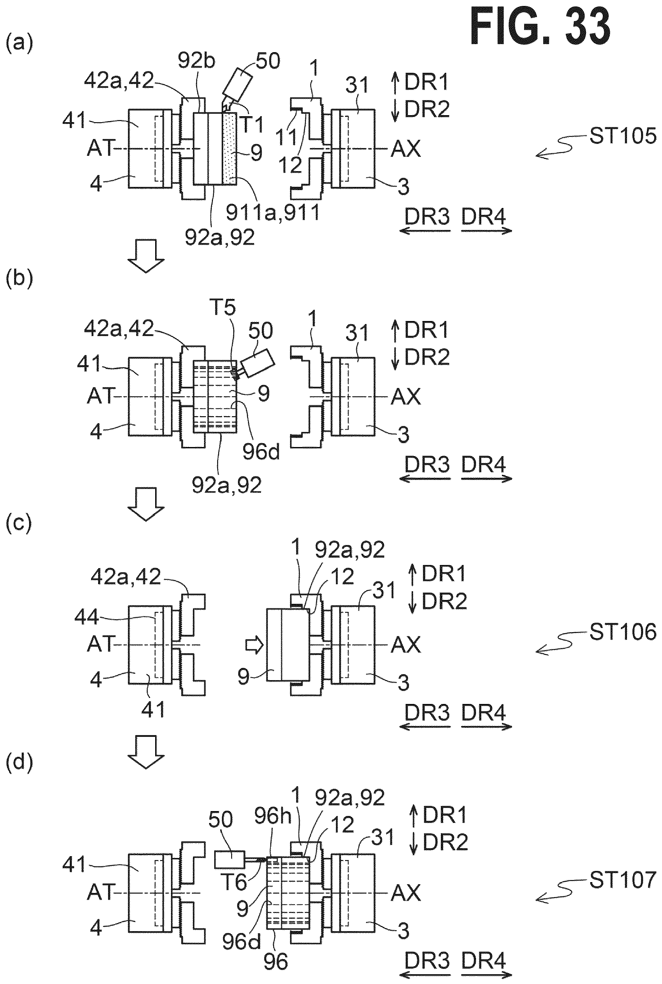

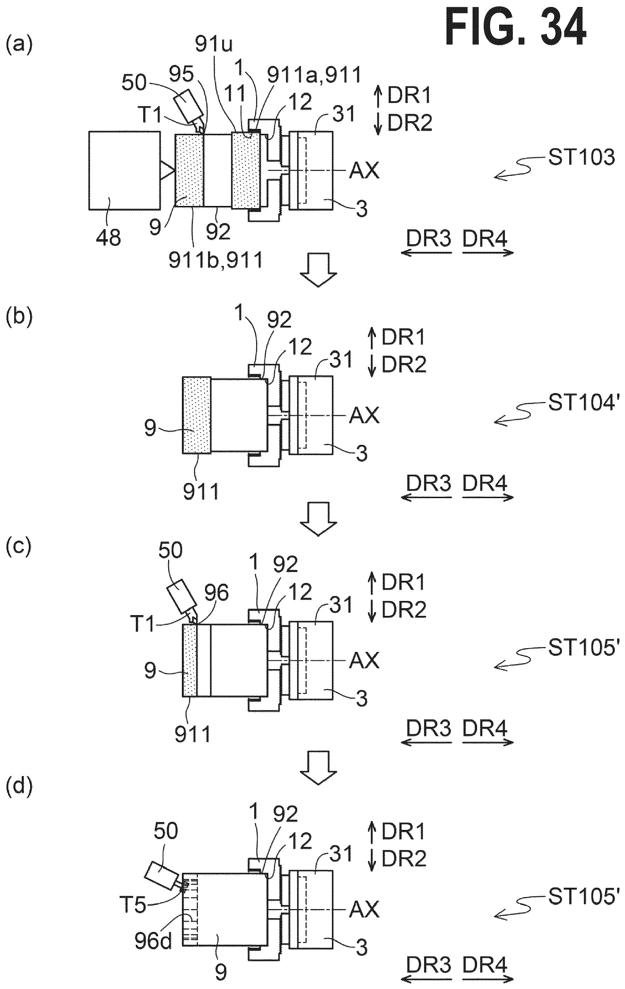

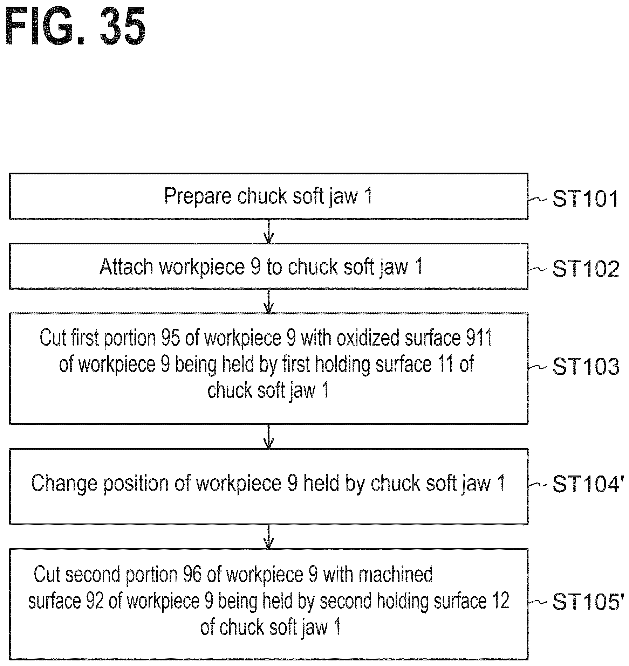

A workpiece machining method in the first embodiment will be described with reference to FIG. 1 to FIG. 35. FIG. 22 is a schematic diagram illustrating a state after a workpiece 9 has been attached to the chuck soft jaw 1. FIG. 23 is a schematic diagram illustrating how a first portion 95 of the workpiece 9 is cut with the workpiece 9 being held by the first holding surface 11 of the chuck soft jaw 1. FIG. 24 and FIG. 25 are schematic diagrams illustrating the workpiece 9 being transferred from the first workpiece holder 3 to the second workpiece holder 4. FIG. 26 is a schematic diagram illustrating how an oxidized surface 911 of the workpiece 9 is cut with the workpiece 9 being held by the second workpiece holder 4. FIG. 27 is a schematic diagram illustrating the workpiece 9 being transferred from the second workpiece holder 4 to the first workpiece holder 3. FIG. 28 is a schematic diagram illustrating how a second portion 96 of the workpiece 9 is cut with the workpiece 9 being held by the second holding surface 12 of the chuck soft jaw 1. FIG. 29 is a flowchart showing an example of the workpiece machining method in the first embodiment. FIG. 30 is a schematic diagram illustrating a workpiece 9 being machined in a first modification of the workpiece machining method. FIG. 31 is a diagram illustrating a workpiece 9 being ground by a grinding tool T2. FIG. 32 is a schematic diagram illustrating a workpiece 9 being machined in a second modification of the workpiece machining method. FIG. 33 is a schematic diagram illustrating a workpiece 9 being machined in a third modification of the workpiece machining method. FIG. 34 is a schematic diagram illustrating a workpiece 9 being machined in a fourth modification of the workpiece machining method. FIG. 35 is a flowchart showing another example of the workpiece machining method in the first embodiment.

As illustrated in FIG. 22, the first step ST101 prepares the chuck soft jaw 1 having the second holding surface 12 and the first holding surface 11 with a higher hardness than a hardness of the second holding surface 12. The first step ST1 is a preparation step. The chuck soft jaw 1 prepared in the preparation step may be any of the chuck soft jaws in the first embodiment described with reference to FIG. 1 to FIG. 12, or any other chuck soft jaws. The chuck soft jaw 1 prepared in the preparation step may be a chuck soft jaw made according to the chuck soft jaw making method in the first embodiment, or any other chuck soft jaws.

The chuck soft jaw 1 is supported by the chuck main body 31 in a manner movable in the first direction DR1 away from the first axis AX of the first workpiece holder 3 and in the second direction DR2 toward the first axis AX. As illustrated in FIG. 22, the workpiece 9 is attached to the chuck soft jaw 1 that is supported by the chuck main body 31 in the second step ST102. The second step ST102 is a workpiece attachment step.

As illustrated in FIG. 23, a first portion 95 of the workpiece 9 is cut in the third step ST103. The third step ST103 is a first cutting step. In the example illustrated in FIG. 23, the first portion 95 of the workpiece 9 is cut with the oxidized surface 911 of the workpiece 9 (more specifically, the oxidized surface 911a on the side in the fourth direction DR4 of the workpiece 9) being held by the first holding surface 11 of the chuck soft jaw 1.

The first cutting step (third step ST103) includes bringing the cutting tool T1 into contact with the first portion 95 of the workpiece 9 while the chuck main body 31 holding the workpiece 9 via the chuck soft jaw 1 is rotating about the first axis AX.

In the example illustrated in FIG. 23, the first portion 95 that is cut in the first cutting step (third step ST103) includes an oxidized surface 911b of the workpiece 9 that is positioned further in the third direction DR3 than the first holding surface 11. Thus, the execution of the first cutting step turns the oxidized surface 911b on the side in the third direction DR3 of the workpiece 9 into a machined surface 92 (more specifically, a first machined surface 92b on the side in the third direction DR3).

Due to the concavity and convexity on the oxidized surface 911, slippage can readily occur between the oxidized surface 911 and the first holding surface 11. Therefore, the first holding surface 11 needs to impart a relatively large gripping force on the workpiece 9 when the third step ST103 is executed. Since the first holding surface 11 has a relatively high hardness, it is suitable to impart a relatively large gripping force. The relatively high hardness of the first holding surface 11 makes it less likely to suffer damage caused by the contact between the first holding surface 11 and the oxidized surface 911. The first holding surface 11 may include concavity and convexity 111 such as grooves (see FIG. 4, FIG. 7, FIG. 16, and FIG. 20 as required). Such concavity and convexity 111 enhance the gripping properties of the first holding surface 11 on the oxidized surface 911 of the workpiece 9.

As illustrated in FIG. 24 and FIG. 25, the workpiece 9 is transferred from the first workpiece holder 3 to the second workpiece holder 4 in the fourth step ST104. The fourth step ST104 is a first transfer step. The first transfer step may be performed automatically using the first workpiece holder 3 and second workpiece holder 4. Alternatively, some parts of the first transfer step may be carried out with other transfer devices than the first workpiece holder 3 and second workpiece holder 4 (more specifically, such as a gantry loader, or a hand attached to a first head 52 to be described later for replacing workpieces), or may be carried out manually.

As illustrated in FIG. 24, the first transfer step (fourth step ST104) includes moving the chuck soft jaw 1 in the direction away from the oxidized surface 911a of the workpiece 9. With this movement, the workpiece 9 is released from the first holding surface 11 of the chuck soft jaw 1. The first transfer step (fourth step ST104) also includes moving a jaw 42 of the second workpiece holder 4 in the direction toward a surface (more specifically, the first machined surface 92b) of the workpiece 9. With this movement, the surface (more specifically, the first machined surface 92b) of the workpiece 9 is held by the jaw 42.

As illustrated in FIG. 26, in the fifth step ST105, the oxidized surface 911 (more specifically, the oxidized surface 911a on the side in the fourth direction DR4) of the workpiece 9 is cut. The fifth step ST105 is a second cutting step. The second cutting step includes cutting the oxidized surface 911 of the workpiece 9 to form the machined surface 92 on the workpiece 9 held by the second workpiece holder 4. More specifically, the oxidized surface 911a on the side in the fourth direction DR4 of the workpiece 9 is cut, so that a second machined surface 92a is formed on the side in the fourth direction DR4.

In the example illustrated in FIG. 26, the first machined surface 92b on the side in the third direction DR3 of the workpiece 9 is held by the jaw 42 of the second workpiece holder 4 during the execution of the second cutting step. To prevent the first machined surface 92b from being damaged by the jaw 42, the jaw 42 should preferably be a soft jaw 42a that has not undergone a hardening process.

In the example illustrated in FIG. 26, the second cutting step (fifth step ST105) includes bringing the cutting tool T1 into contact with the workpiece 9 (more specifically, the oxidized surface 911a on the side in the fourth direction DR4 of the workpiece 9) while the second chuck main body 41 holding the workpiece 9 via the jaw 42 rotates about the center axis of the second chuck main body 41 (hereinafter "second axis AT").

The second cutting step (fifth step ST105) may include a rough machining step that removes the oxidized surface 911a on the side in the fourth direction DR4, and a finishing machining step that follows this rough machining step.

As illustrated in FIG. 27, the workpiece 9 is transferred from the second workpiece holder 4 to the first workpiece holder 3 in the sixth step ST106. The sixth step ST106 is a second transfer step. The second transfer step may be performed automatically using the first workpiece holder 3 and second workpiece holder 4. Alternatively, some parts of the second transfer step may be carried out with other transfer devices than the first workpiece holder 3 and second workpiece holder 4 (more specifically, such as a gantry loader, or a hand attached to the first head 52 to be described later for replacing workpieces), or may be carried out manually.

The second transfer step (sixth step ST106) includes moving the jaw 42 in the direction away from the surface of the workpiece 9. With this movement, the workpiece 9 is released from the jaw 42.

In the example illustrated in FIG. 27, the second transfer step (sixth step ST106) includes transferring the workpiece 9 from the second workpiece holder 4 to the first workpiece holder 3 so that the machined surface 92 (more specifically, the second machined surface 92a) is held by the second holding surface 12 of the chuck soft jaw 1. More specifically, in the example illustrated in FIG. 27, the second transfer step (sixth step ST106) includes moving the second holding surface 12 of the chuck soft jaw 1 in the direction toward the second machined surface 92a of the workpiece 9. With this movement, the second machined surface 92a of the workpiece 9 is held by the second holding surface 12 of the chuck soft jaw 1.

As illustrated in FIG. 28, a second portion 96 of the workpiece 9 is machined in the seventh step ST107. The seventh step ST107 is a workpiece machining step. The workpiece machining step (seventh step ST107) is carried out to the machined surface 92 (more specifically, second machined surface 92a), which has been formed by cutting the oxidized surface of the workpiece 9 (more specifically, the oxidized surface on the side in the fourth direction DR4 of the workpiece 9) with the machined surface 92 being held by the second holding surface 12 of the chuck soft jaw 1.

Since the second holding surface 12 has a relatively low hardness, the machined surface 92 of the workpiece 9 is prevented from being damaged by the second holding surface 12.

In the example illustrated in FIG. 28, the workpiece machining step (seventh step ST107) includes cutting the second portion 96 of the workpiece 9. While the first cutting step (third step ST103) is a rough machining step that removes the oxidized surface of the workpiece 9, the cutting step in the example illustrated in FIG. 28 is a finishing machining step.

In the example illustrated in FIG. 28, the workpiece machining step (seventh step ST107) includes bringing the cutting tool T1 into contact with a finishing target surface of the workpiece 9 while the chuck main body 31 holding the workpiece 9 via the chuck soft jaw 1 is rotating about the first axis AX.

According to the workpiece machining method in the first embodiment, when a machining operation in which the oxidized surface 911 of the workpiece 9 is held by the chuck soft jaw 1 (see FIG. 23), and a machining operation in which the machined surface 92 of the workpiece 9 is held by the chuck soft jaw 1 (see FIG. 28), are both performed, there is no need to change the jaws supported on the chuck main body 31 (more specifically, there is no need to change the jaw supported on the chuck main body 31 from a hard jaw to a soft jaw). Therefore, according to the workpiece machining method of the first embodiment, the time required to change the jaws is saved, thus reducing the time required to machine the workpiece 9.

Moreover, according to the workpiece machining method of the first embodiment, the oxidized surface 911 of the workpiece 9 is held by the first holding surface 11 having a relatively high hardness (see FIG. 23). Therefore, the first holding surface 11 that makes tight contact with the oxidized surface 911 is prevented from being damaged by the oxidized surface 911. The chuck soft jaw 1 can thus have improved durability and longer service life.

Further, according to the workpiece machining method of the first embodiment, the machined surface 92 of the workpiece 9 is held by the second holding surface 12 having a relatively low hardness (see FIG. 28). This prevents the machined surface 92 of the workpiece 9 from being damaged by the second holding surface 12.

After the machining of the workpiece 9 is finished, the workpiece 9 is removed from the chuck soft jaw 1. A second workpiece may then be attached to the chuck soft jaw 1. The second workpiece is machined in a procedure similar to that for the machining of the workpiece 9.

If the chuck soft jaw 1 is found damaged after the machining of the workpiece 9 is completed, at least some parts of the method of making the chuck soft jaw described above may be carried out again. For example, the damaged chuck soft jaw 1 may be regarded as the raw material block, and at least one of the first holding surface 11 and second holding surface 12 may be formed again on this raw material block. Forming the first holding surface 11 again may include cutting the damaged first holding surface 11, and subjecting the surface formed by the cutting to heat treatment (more specifically, quenching). Alternatively, forming the first holding surface 11 again may include cutting the damaged first holding surface 11, and adding a metal material to the surface formed by the cutting. Forming the second holding surface 12 again may include cutting the damaged second holding surface 12.

### (First modification of workpiece machining method)

A first modification of the workpiece machining method will be described with reference to FIG. 30. The first step ST101 to fourth step ST104, and sixth step ST106 in the first modification of the workpiece machining method are respectively the same as the first step ST101 to fourth step ST104, and sixth step ST106 described above. Therefore, repetitive descriptions of the first step ST101 to fourth step ST104, and sixth step ST106 of the first modification of the workpiece machining method will be omitted.

As illustrated in FIG. 30(a), in the fifth step ST105, the oxidized surface 911 (more specifically, the oxidized surface 911a on the side in the fourth direction DR4) of the workpiece 9 is cut. The fifth step ST105 is a second cutting step. The second cutting step includes cutting the oxidized surface 911 of the workpiece 9 to form the machined surface 92 on the workpiece 9 held by the second workpiece holder 4. More specifically, the oxidized surface 911a on the side in the fourth direction DR4 of the workpiece 9 is cut, so that a second machined surface 92a is formed on the side in the fourth direction DR4.

In the example illustrated in FIG. 30(a), the first machined surface 92b on the side in the third direction DR3 of the workpiece 9 is held by the jaw 42 (more specifically, soft jaw 42a) of the second workpiece holder 4 during the execution of the second cutting step. In the example illustrated in FIG. 30(a), the second cutting step includes bringing the cutting tool T1 into contact with the workpiece 9 while the second chuck main body 41 holding the workpiece 9 via the jaw 42 is rotating about the second axis AT.

After the execution of the fifth step ST105 and before the execution of the sixth step ST106, the workpiece 9 held by the second workpiece holder 4 may be ground by a grinding tool T2 (grinding step). In the example illustrated in FIG. 30, the first processing unit 50 performs both of an operation of cutting the oxidized surface 911a of the workpiece 9 using the cutting tool T1, and an operation of grinding the workpiece 9 (more specifically, the second machined surface 92a of the workpiece 9) using the grinding tool T2.

In the example illustrated in FIG. 30(b), the grinding step includes bringing the grinding tool T2 into contact with the workpiece 9 while the second chuck main body 41 holding the workpiece 9 via the jaw 42 is rotating about the second axis AT.

In the example illustrated in FIG. 30(d), the second portion 96 of the workpiece 9 is machined in the seventh step ST107. The seventh step ST107 is a workpiece machining step. The workpiece machining step (seventh step ST107) is carried out to the machined surface 92 (more specifically, second machined surface 92a), which has been formed by cutting and grinding the oxidized surface of the workpiece 9 (more specifically, the oxidized surface on the side in the fourth direction DR4 of the workpiece 9) with the machined surface 92 being held by the second holding surface 12 of the chuck soft jaw 1. Note, the surface formed by grinding after cutting is herein understood as one form of the machined surface 92.

In the example illustrated in FIG. 30(d), the workpiece machining step (seventh step ST107) includes grinding the second portion 96 of the workpiece 9.

In the example illustrated in FIG. 30(d), the workpiece machining step (seventh step ST107) includes bringing the grinding tool T2 into contact with the second portion 96 of the workpiece 9 while the chuck main body 31 holding the workpiece 9 via the chuck soft jaw 1 is rotating about the first axis AX.

Compared to cutting (more precisely, turning), the cutting depth is smaller in grinding. Therefore, the workpiece 9 only needs to be held by the second holding surface 12 having a relatively low hardness with a relatively small gripping force.

The second portion 96 should be ground by the grinding tool T2 with high precision. Let us assume that the center axis AW of the workpiece 9 is eccentric with the first axis AX (in other words, the rotation axis of the chuck main body 31) as illustrated in FIG. 31. In this case, the workpiece 9 vibrates up and down when rotating about the first axis AX. Therefore, for precise grinding, it is preferable to move the grinding tool T2 up and down based on the eccentricity between the first axis AX and the center axis AW of the workpiece 9 and the angular position of the chuck main body 31. The center axis AW of the workpiece 9 can be determined for example by computer analysis of measurement results of the second machined surface 92a (see FIG. 30(b)) obtained with a touch sensor.

### (Second modification of workpiece machining method)

A second modification of the workpiece machining method will be described with reference to FIG. 32. The first step ST101 to fourth step ST104, and sixth step ST106 in the second modification of the workpiece machining method are respectively the same as the first step ST101 to fourth step ST104, and sixth step ST106 described above. Therefore, repetitive descriptions of the first step ST101 to fourth step ST104, and sixth step ST106 of the second modification of the workpiece machining method will be omitted.

As illustrated in FIG. 32(a), in the fifth step ST105, the oxidized surface 911 (more specifically, the oxidized surface 911a on the side in the fourth direction DR4) of the workpiece 9 is cut. The fifth step ST105 is a second cutting step. The second cutting step includes cutting the oxidized surface 911 of the workpiece 9 to form the machined surface 92 on the workpiece 9 held by the second workpiece holder 4. More specifically, the oxidized surface 911a on the side in the fourth direction DR4 of the workpiece 9 is cut, so that the second machined surface 92a is formed on the side in the fourth direction DR4.

In the example illustrated in FIG. 32(a), the first machined surface 92b on the side in the third direction DR3 of the workpiece 9 is held by the jaw 42 (more specifically, soft jaw 42a) of the second workpiece holder 4 during the execution of the second cutting step. In the example illustrated in FIG. 32(a), the second cutting step includes bringing the cutting tool T1 into contact with the workpiece 9 while the second chuck main body 41 holding the workpiece 9 via the jaw 42 is rotating about the second axis AT.

After the execution of the fourth step ST104 or fifth step ST105 and before the execution of the sixth step ST106, an internal gear 96c may be formed on the workpiece 9 that is held by the second workpiece holder 4. The internal gear 96c is formed using a skiving cutter T3. In the example illustrated in FIG. 32, the first processing unit 50 performs both of an operation of cutting the oxidized surface 911a of the workpiece 9 using the cutting tool T1, and an operation of skiving the workpiece 9 using the skiving cutter T3.

In the example illustrated in FIG. 32(b), the skiving step includes bringing the skiving cutter T3 rotating about the tool axis into contact with the workpiece 9 while the second chuck main body 41 holding the workpiece 9 via the jaw 42 is rotating about the second axis AT.

In the example illustrated in FIG. 32(d), the second portion 96 of the workpiece 9 is machined in the seventh step ST107. The seventh step ST107 is a workpiece machining step. The workpiece machining step (seventh step ST107) is carried out to the machined surface 92 (more specifically, second machined surface 92a), which has been formed by cutting the oxidized surface of the workpiece 9 (more specifically, the oxidized surface on the side in the fourth direction DR4 of the workpiece 9) with the machined surface 92 being held by the second holding surface 12 of the chuck soft jaw 1.

In the example illustrated in FIG. 32(d), the workpiece machining step (seventh step ST107) includes removing a bur 96b formed on the second portion 96 of the workpiece 9 (more specifically, the internal gear 96c of the workpiece 9). The bur 96b is removed using a deburring tool T4.

In the example illustrated in FIG. 32(d), the workpiece machining step (seventh step ST107) includes bringing the deburring tool T4 into contact with the bur 96b of the workpiece 9 while the chuck main body 31 holding the workpiece 9 via the chuck soft jaw 1 is rotating about the first axis AX.

In the example illustrated in FIG. 32(d), the machined surface 92 of the workpiece 9 is held by the second holding surface 12 having a relatively low hardness during the execution of the deburring step. This prevents the machined surface 92 from being damaged by the second holding surface 12 during the execution of the deburring step.

### (Third modification of workpiece machining method)

A third modification of the workpiece machining method will be described with reference to FIG. 33. The first step ST101 to fourth step ST104, and sixth step ST106 in the third modification of the workpiece machining method are respectively the same as the first step ST101 to fourth step ST104, and sixth step ST106 described above. Therefore, repetitive descriptions of the first step ST101 to fourth step ST104, and sixth step ST106 of the third modification of the workpiece machining method will be omitted.

As illustrated in FIG. 33(a), in the fifth step ST105, the oxidized surface 911 (more specifically, the oxidized surface 911a on the side in the fourth direction DR4) of the workpiece 9 is cut. The fifth step ST105 is a second cutting step. The second cutting step includes cutting the oxidized surface 911 of the workpiece 9 to form the machined surface 92 on the workpiece 9 held by the second workpiece holder 4. More specifically, the oxidized surface 911a on the side in the fourth direction DR4 of the workpiece 9 is cut, so that the second machined surface 92a is formed on the side in the fourth direction DR4.

In the example illustrated in FIG. 33(a), the first machined surface 92b on the side in the third direction DR3 of the workpiece 9 is held by the jaw 42 (more specifically, soft jaw 42a) of the second workpiece holder 4 during the execution of the second cutting step. In the example illustrated in FIG. 33(a), the second cutting step includes bringing the cutting tool T1 into contact with the workpiece 9 while the second chuck main body 41 holding the workpiece 9 via the jaw 42 is rotating about the second axis AT.

After the execution of the fourth step ST104 or fifth step ST105 and before the execution of the sixth step ST106, a gear 96d such as an internal gear or an external gear may be formed on the workpiece 9 that is held by the second workpiece holder 4. The gear 96d is formed using a gear cutting tool T5 (e.g., skiving cutter, hobbing cutter, etc). More specifically, an internal gear may be formed using a skiving cutter, or an external gear may be formed using a hobbing cutter. In the example illustrated in FIG. 33, the first processing unit 50 performs both of an operation of cutting the oxidized surface 911a of the workpiece 9 using the cutting tool T1, and an operation of forming a gear 96d on the workpiece 9 using the gear cutting tool T5.

In the example illustrated in FIG. 33(b), the gear cutting step includes bringing the gear cutting tool T5 rotating about the tool axis into contact with the workpiece 9 while the second chuck main body 41 holding the workpiece 9 via the jaw 42 is rotating about the second axis AT.

In the example illustrated in FIG. 33(d), the second portion 96 of the workpiece 9 is machined in the seventh step ST107. The seventh step ST107 is a workpiece machining step. The workpiece machining step (seventh step ST107) is carried out to the machined surface 92 (more specifically, second machined surface 92a), which has been formed by cutting the oxidized surface of the workpiece 9 (more specifically, the oxidized surface on the side in the fourth direction DR4 of the workpiece 9) with the machined surface 92 being held by the second holding surface 12 of the chuck soft jaw 1.

In the example illustrated in FIG. 33(d), the workpiece machining step (seventh step ST107) includes forming a hole 96h or a recess and the like in the second portion 96 of the workpiece 9. The hole 96h or recess and the like is formed using a milling tool T6 (e.g., drill), for example.

In the example illustrated in FIG. 33(d), a gear 96d is formed on the workpiece 9 using the gear cutting tool T5 before the execution of the seventh step ST107. The seventh step ST107 may include detecting the angular position of the gear 96d, and forming a hole 96h or recess and the like in desired positions using the milling tool T6, based on the detected angular position.

In the example illustrated in FIG. 33(d), the machined surface 92 of the workpiece 9 is held by the second holding surface 12 having a relatively low hardness during the execution of the milling step. This prevents the machined surface 92 from being damaged by the second holding surface 12 during the execution of the milling step.

### (Fourth modification of workpiece machining method)

In the example illustrated in FIG. 24, FIG. 25, FIG. 27, FIG. 30(c), FIG. 32(c), and FIG. 33(c), the workpiece machining method includes a step of transferring the workpiece 9 between the first workpiece holder 3 and the second workpiece holder 4. On the other hand, in the fourth modification of the workpiece machining method, the step of transferring the workpiece 9 between the first workpiece holder 3 and the second workpiece holder 4 is omitted.

The first step ST101 and second step ST102 in the fourth modification of the workpiece machining method are respectively the same as the first step ST101 and second step ST102 described above. Therefore, repetitive descriptions of the first step ST101 and second step ST102 of the fourth modification of the workpiece machining method will be omitted.

As illustrated in FIG. 34(a), in the third step ST103, the first portion 95 of the workpiece 9 (more specifically, the oxidized surface 911b on the side in the third direction DR3 of the workpiece 9) is cut. The machined surface 92 is formed by cutting the first portion 95 of the workpiece 9. The third step ST103 is a first cutting step.

In the example illustrated in FIG. 34(a), in the first cutting step, the first portion 95 of the workpiece 9 is cut with the oxidized surface 911 of the workpiece 9 (more specifically, the oxidized surface 911a on the side in the fourth direction DR4 of the workpiece 9) being held by the first holding surface 11 of the chuck soft jaw 1.

In the example illustrated in FIG. 34(a), the first cutting step (third step ST103) includes bringing the cutting tool T1 into contact with the first portion 95 of the workpiece 9 while the chuck main body 31 holding the workpiece 9 via the chuck soft jaw 1 is rotating about the first axis AX.

As illustrated in FIG. 34(a), one end of the workpiece 9 on the side in the third direction DR3 may be pressed by a tailstock 48 during the execution of the third step ST103.

As illustrated in FIG. 34(b), the holding position of the workpiece 9 held by the chuck soft jaw 1 is changed in the fourth step ST104'. The fourth step ST104' is a holding position changing step.

In the example illustrated in FIG. 34(b), the holding position changing step (fourth step ST104') includes (1) moving the chuck soft jaw 1 in a direction away from the workpiece 9, (2) turning around the workpiece 9, and (3) moving the second holding surface 12 of the chuck soft jaw 1 in a direction toward the machined surface 92 of the workpiece 9. With the holding position changing step thus carried out, the machined surface 92 of the workpiece 9 is held by the second holding surface 12 of the chuck soft jaw 1.

In the example illustrated in FIG. 34(c), the second portion 96 of the workpiece 9 is machined in the fifth step ST105'. The fifth step ST105' is a workpiece machining step. The workpiece machining step (fifth step ST105') is carried out with the machined surface 92, which has been formed by cutting the oxidized surface of the workpiece 9, being held by the second holding surface 12 of the chuck soft jaw 1.

Since the second holding surface 12 has a relatively low hardness, the machined surface 92 of the workpiece 9 is prevented from being damaged by the second holding surface 12.

In the example illustrated in FIG. 34(c), the workpiece machining step (fifth step ST105') includes cutting the second portion 96 of the workpiece 9.

In the example illustrated in FIG. 34(c), the workpiece machining step (fifth step ST105') includes bringing the cutting tool T1 into contact with the workpiece 9 while the chuck main body 31 holding the workpiece 9 via the chuck soft jaw 1 is rotating about the first axis AX.

Alternatively, or additionally, as illustrated in FIG. 34(d), the workpiece machining step (fifth step ST105') may include forming a gear 96d such as an internal gear or an external gear on the workpiece 9 that is held by the first workpiece holder 3. The gear 96d is formed using a gear cutting tool T5 (e.g., skiving cutter, hobbing cutter, etc). In the example illustrated in FIG. 34(d), the workpiece machining step (fifth step ST105') includes bringing the gear cutting tool T5 rotating about the tool axis into contact with the workpiece 9 while the chuck main body 31 holding the workpiece 9 via the chuck soft jaw 1 is rotating about the first axis AX.

In the example illustrated in FIG. 23 and FIG. 34(a), the first portion 95 of the workpiece 9 is cut with an outer surface of the workpiece 9 being held by the first holding surface 11 of the chuck soft jaw 1 in the third step ST103. Alternatively, in the case where the chuck soft jaw 1 shown in FIG. 2 or FIG. 11 is used, the first portion 95 of the workpiece 9 is cut with an inner surface 91n of the workpiece 9 being held by the first holding surface 11 of the chuck soft jaw 1 in the third step ST103.

In the example illustrated in FIG. 28, FIG. 30(d), FIG. 32(d), FIG. 33(d), FIG. 34(c), and FIG. 34(d), the second portion 96 of the workpiece 9 is cut with an outer surface of the workpiece 9 being held by the second holding surface 12 of the chuck soft jaw 1 in the seventh step ST107 (or fifth step ST105'). Alternatively, in the case where the chuck soft jaw 1 shown in FIG. 3 or FIG. 10 is used, the second portion 96 of the workpiece 9 is cut with an inner surface of the workpiece 9 being held by the second holding surface 12 of the chuck soft jaw 1 in the seventh step ST107 (or fifth step ST105').

### (Hybrid machine tool 2)

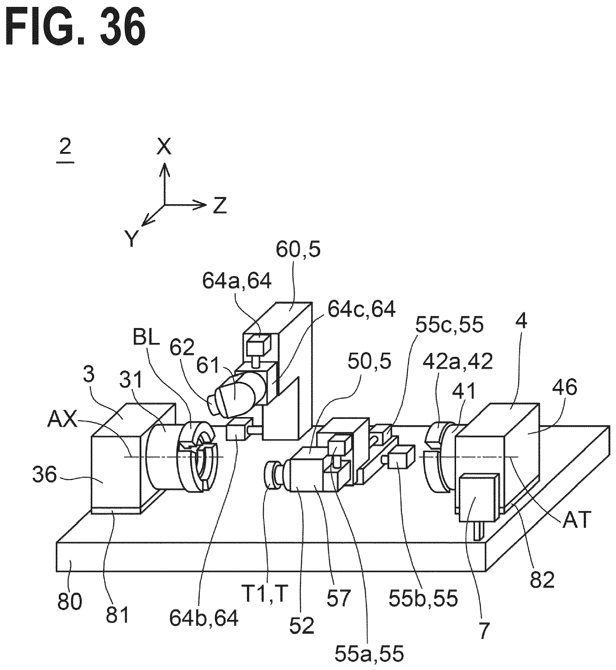

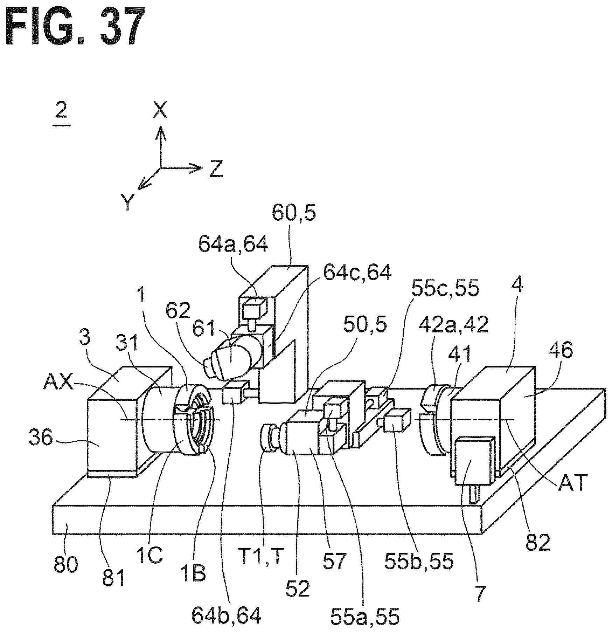

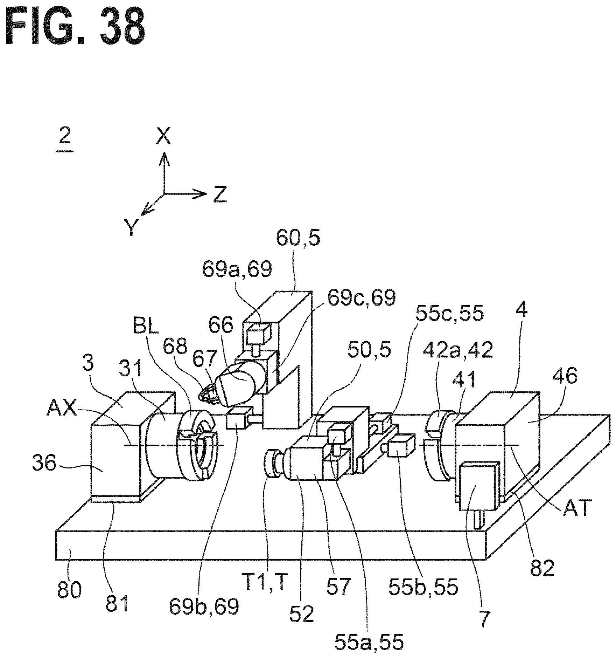

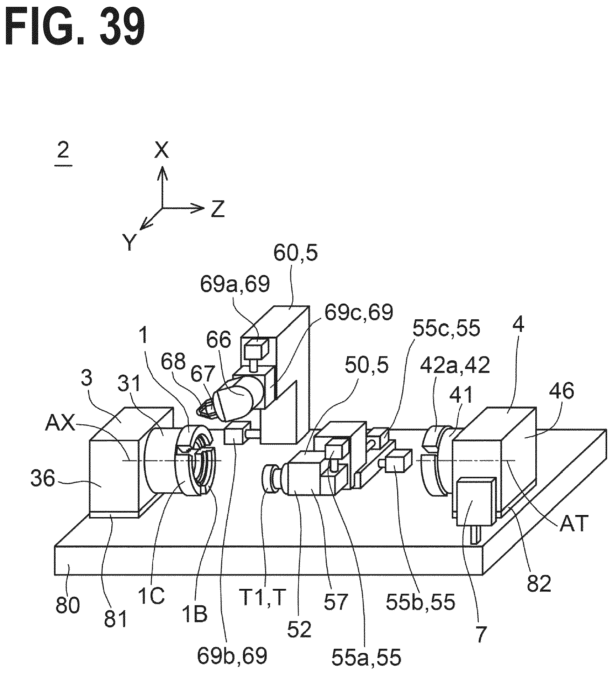

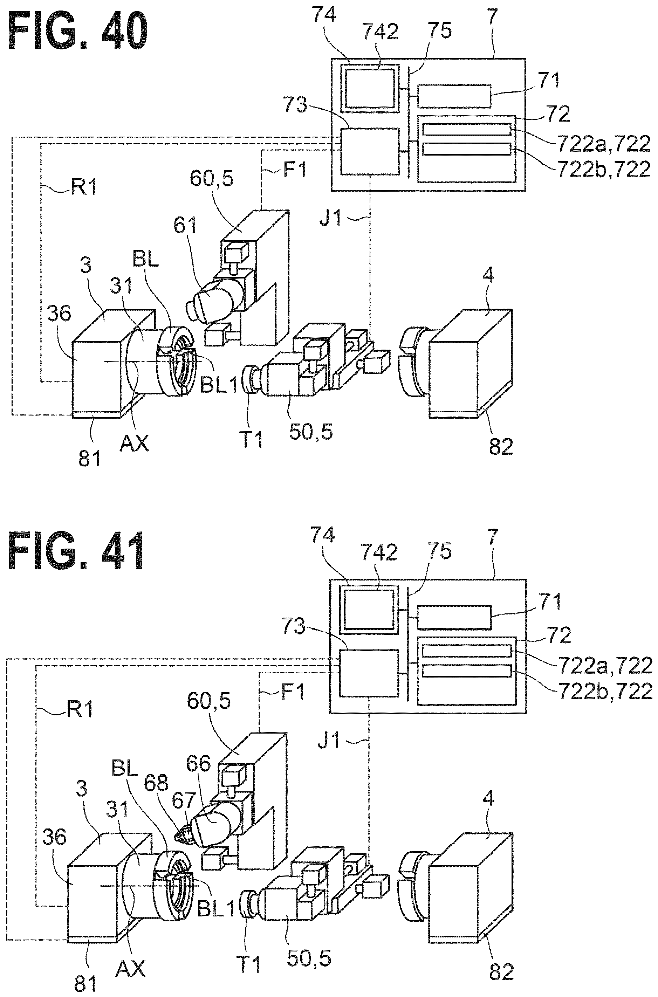

The hybrid machine tool 2 in the first embodiment will be described with reference to FIG. 1 to FIG. 42. FIG. 36 and FIG. 37 are schematic perspective diagrams illustrating the hybrid machine tool 2 in the first embodiment. FIG. 38 and FIG. 39 are schematic perspective diagrams illustrating the hybrid machine tool 2 in the first modification of the first embodiment. FIG. 40 to FIG. 42 are diagrams illustrating how a controller 7 is able to send control commands to a plurality of control targets.

In the example illustrated in FIG. 36, the hybrid machine tool 2 in the first embodiment includes a plurality of processing units 5 for making the chuck soft jaw, first workpiece holder 3, and a controller 7 that controls the plurality of processing units 5 and first workpiece holder 3.

The plural processing units 5 make the chuck soft jaw 1 (see FIG. 37) from the raw material block BL (see FIG. 36) attached to the chuck main body 31. More specifically, the plural processing units 5 make the chuck soft jaw 1 (see FIG. 16 or FIG. 20) including the first holding surface 11, which is for holding an oxidized surface of a workpiece, and the second holding surface 12, which is for holding a machined surface of the workpiece, from the raw material block BL (see FIG. 13) attached to the chuck main body 31.

As illustrated in FIG. 22, the first workpiece holder 3 holds the workpiece 9 via the chuck soft jaw 1. The first workpiece holder 3 includes the chuck main body 31 that supports the chuck soft jaw 1, a first drive unit 34 for moving the chuck soft jaw 1 and a first rotary drive unit 36.

The first drive unit 34 moves the chuck soft jaw 1 in the first direction DR1 away from the first axis AX (more specifically, a radial direction away from the first axis AX), and in the second direction DR2 toward the first axis AX.

The first rotary drive unit 36 rotates the chuck main body 31 about the first axis AX. The first rotary drive unit 36 rotates the chuck main body 31, the chuck soft jaw 1 supported by the chuck main body 31, and the workpiece 9 held by the chuck soft jaw 1, integrally about the first axis AX.

In the example illustrated in FIG. 36, the plural processing units 50 include a first processing unit 50 and a second processing unit 60.

The first processing unit 50 is able to hold a cutting tool T1 (see FIG. 16 or FIG. 20). In the example illustrated in FIG. 16 or FIG. 20, the first processing unit (more specifically, the cutting tool T held on the first processing unit 50) forms the second holding surface 12 on the raw material block BL, by cutting the raw material block BL that is attached to the chuck main body 31.

In the example illustrated in FIG. 14 or FIG. 17, the first processing unit (more specifically, the cutting tool T held on the first processing unit 50) forms the cut surface BL1, which is to be the base of the first holding surface 11, on the raw material block BL, by cutting the raw material block BL that is attached to the chuck main body 31.

In the example illustrated in FIG. 15 or FIG. 18, the second processing unit 60 forms the first holding surface 11 having a higher hardness than a hardness of the second holding surface 12 on the raw material block BL, by processing the raw material block BL (more specifically, the cut surface BL1 mentioned above) that is attached to the chuck main body 31.

As illustrated in FIG. 15, the second processing unit 60 may form the first holding surface 1 having a higher hardness than a hardness of the second holding surface 12 (in other words, quenched first holding surface 11) by irradiating the raw material block BL (more specifically, the cut surface BL1 mentioned above) with a laser beam LB.

Alternatively, as illustrated in FIG. 18, the second processing unit 60 may form the first holding surface 11 having a higher hardness than a hardness of the second holding surface 12 by adding a metal material N having a higher hardness than a hardness of the material forming the raw material block BL to the raw material block BL (more specifically, the cut surface BL1 mentioned above).

The hybrid machine tool 2 in the first embodiment includes the first workpiece holder 3 that holds the workpiece 9 via the chuck soft jaw 1, and the plurality of processing units 5 for forming the first holding surface 11 and second holding surface 12 on the chuck soft jaw 1. Therefore, the operation of making the chuck soft jaw 1 and the operation of machining the workpiece 9 can be performed using the same hybrid machine tool 2.

The hybrid machine tool 2 in the first embodiment is configured to make a chuck soft jaw 1, which includes the first holding surface 11 having a suitable hardness for holding a first surface 91 (more specifically, oxidized surface 911) of the workpiece 9 (more specifically, the first holding surface 11 having a relatively high hardness), and the second holding surface 12 having a suitable hardness for holding a machined surface 92 of the workpiece 9 (more specifically, the second holding surface 12 having a relatively low hardness).

Therefore, when the hybrid machine tool 2 performs a machining operation in which the first surface 91 of the workpiece 9 is held by the chuck soft jaw 1, as well as a machining operation in which the machined surface 92 of the workpiece 9 is held by the chuck soft jaw 1, there is no need to change the jaws supported on the chuck main body 31 (more specifically, there is no need to change the jaw supported on the chuck main body 31 from a hard jaw to a soft jaw). Accordingly, in the case where the hybrid machine tool 2 of the first embodiment is used to machine a workpiece 9, the time required to change the jaws is saved, thus reducing the time required to machine the workpiece 9.

### (Optional or additional configurations)

Next, some optional or additional configurations that may be adopted in the hybrid machine tool 2 according to the first embodiment will be described with reference to FIG. 1 to FIG. 42.

### (Plural chuck soft jaws)

In the example illustrated in FIG. 37, the chuck main body 31 supports the chuck soft jaw 1, a second chuck soft jaw 1B, and a third chuck soft jaw 1C. Additionally, the chuck main body 31 may support a fourth chuck soft jaw. The shape and structure of the second chuck soft jaw 1B are the same as those of the chuck soft jaw 1. The shape and structure of the third chuck soft jaw 1C are the same as those of the chuck soft jaw 1. Therefore, repetitive descriptions of the second chuck soft jaw 1B and third chuck soft jaw 1C will be omitted. The above descriptions of the chuck soft jaw 1, the method of making the chuck soft jaw, and the workpiece machining method in the first embodiment should serve as the description of the second chuck soft jaw 1B, by replacing the term "chuck soft jaw 1" with "second chuck soft jaw 1B" when reading the above descriptions. Likewise, the above descriptions of the chuck soft jaw 1, the method of making the chuck soft jaw, and the workpiece machining method in the first embodiment should serve as the description of the third chuck soft jaw 1C, by replacing the term "chuck soft jaw 1" with "third chuck soft jaw 1C" when reading the above descriptions.

As would be understood by replacing the terms as above, the first holding surface 11 of the chuck soft jaw 1, the first holding surface 11 of the second chuck soft jaw 1B, and the first holding surface 11 of the third chuck soft jaw 1C move in a coordinated manner to hold the first surface 91 (more specifically, the oxidized surface 911) of the workpiece 9. Likewise, as would be understood by replacing the terms as above, the second holding surface 12 of the chuck soft jaw 1, the second holding surface 12 of the second chuck soft jaw 1B, and the second holding surface 12 of the third chuck soft jaw 1C move in a coordinated manner to hold the machined surface 92 of the workpiece 9. It would also be understood that the first holding surface 11 has a higher hardness than a hardness of the second holding surface 12 in each of the chuck soft jaw 1, second chuck soft jaw 1B, and third chuck soft jaw 1C.

### (First workpiece holder 3)

In the example illustrated in FIG. 2, FIG. 5, FIG. 9, FIG. 11, and FIG. 12, the first workpiece holder 3 includes the chuck main body 31 and the first drive unit 34. The chuck main body 31 may include a movable part 32 to which the chuck soft jaw 1 is fixed, and a base part 33 that supports this movable part 32 in a movable manner. In this case, the first drive unit 34 is able to move the chuck soft jaw 1 and movable part 32 either in the first direction DR1 or the second direction DR2 relative to the base part 33.

The first drive unit 34 should preferably move the chuck soft jaw 1, second chuck soft jaw 1B, and third chuck soft jaw 1C simultaneously in the direction away from the first axis AX (or toward the first axis AX).

As illustrated in FIG. 36, the hybrid machine tool 2 may include a first moving unit 81 (more specifically, a Z-axis servo motor) that moves the first workpiece holder 3 in a direction parallel to the first axis AX.

### (Second workpiece holder 4)

In the example illustrated in FIG. 36, the hybrid machine tool 2 includes the second workpiece holder 4.

The second workpiece holder 4 is able to receive a workpiece 9 from the first workpiece holder 3. The second workpiece holder 4 is also able to hand over a workpiece 9 to the first workpiece holder 3. The transfer of a workpiece from the first workpiece holder 3 or to the first workpiece holder 3 can be mechanical and automatic, or manual.

As illustrated in FIG. 26, the second workpiece holder 4 includes the chuck main body 41, a second drive unit 44, and a second rotary drive unit 46. The second chuck main body 41 supports a jaw 42 (more specifically, soft jaw 42a) that is able to hold a workpiece 9.

The second drive unit 44 is able to move the jaw 42 (more specifically, soft jaw 42a) in the direction away from the second axis AT, and to move the jaw 42 (more specifically, soft jaw 42a) in the direction toward the second axis AT.

The second rotary drive unit 46 rotates the second chuck main body 41 about the center axis (in other words, second axis AT) of the second chuck main body 41. The second axis AT that is the center axis of the second chuck main body 41 is coaxial with, or parallel to, the first axis AX that is the center axis of the chuck main body 31.

As illustrated in FIG. 26, the hybrid machine tool 2 may include a second moving unit 81 (more specifically, a Z-axis servo motor) that moves the second first workpiece holder 4 in a direction parallel to the center axis of the second chuck main body 41.

In the case where the hybrid machine tool 2 includes the second workpiece holder 4, the workpiece machining method that was described with reference to FIG. 22 to FIG. 33 can be carried out using the hybrid machine tool 2.

### (First processing unit 50)

In the example illustrated in FIG. 36, the first processing unit 50 includes a first head 52 that holds a tool T such as a cutting tool T1, and a first head moving unit 55 that moves the first head 52.

The first head moving unit 55 may be a device that is able to move the first head 52 three-dimensionally. In the example illustrated in FIG. 36, the first head moving unit 55 includes a first motor 55a (more specifically, an X-axis servo motor) for moving the first head 52 in a direction parallel to the vertical axis, a second motor 55b (more specifically, a Z-axis servo motor) for moving the first head 52 in a direction parallel to the first axis AX, and a third motor 55c (more specifically, a Y-axis servo motor) for moving the first head 52 in a direction perpendicular to both of the vertical axis and the first axis AX mentioned above.

The first processing unit 50 may include a rotary drive unit 57 for rotating the tool T about the tool axis.

### (Second processing unit 60)

In the example illustrated in FIG. 36, the second processing unit 60 includes a laser irradiator 61 for performing heat treatment on the raw material block BL. In the example illustrated in FIG. 15, the laser irradiator 61 irradiates the raw material block BL (more specifically, the cut surface BL1 of the raw material block BL) with a laser beam LB, to form thereon the first holding surface 11 having a higher hardness than a hardness of the original surface of the raw material block BL.

In the example illustrated in FIG. 36, the second processing unit 60 includes a second head 62 that emits a laser beam, and a second head moving unit 64 that moves the second head 62.

The second head moving unit 64 may be a device that is able to move the second head 62 two-dimensionally, or three-dimensionally. In the example illustrated in FIG. 36, the second head moving unit 64 includes a fourth motor 64a (more specifically, an X-axis servo motor) for moving the second head 62 in a direction parallel to the vertical axis, and a fifth motor 64b (more specifically, a Z-axis servo motor) for moving the second head 62 in a direction parallel to the first axis AX. The second head moving unit 64 may include a sixth motor 64c for tilting the second head 62 about an axis parallel to the horizontal plane.

In the example illustrated in FIG. 15, the laser irradiator 61 is used in the making of the chuck soft jaw 1. Additionally, the laser irradiator 61 may be used for the processing of the workpiece 9.

As illustrated in FIG. 38, the second processing unit 60 may include an additive processing device 66 in place of (or in addition to) the laser irradiator 61. The additive processing device 66 adds a metal material having a higher hardness than a hardness of the raw material block BL to the raw material block BL.

In the example illustrated in FIG. 18, the additive processing device 66 includes a laser head 67 that emits a laser beam LB, and a nozzle 68 that releases metal powder P toward the laser beam LB emitted from the laser head 67. In the example illustrated in FIG. 18, the additive processing device 66 projects the laser beam LB toward the raw material block BL (more specifically, the cut surface BL1 of the raw material block BL), while supplying the metal powder P to the raw material block BL (more specifically, the cut surface BL1 of the raw material block BL). As a result, the metal powder P heated by the energy of the laser beam LB melts and adheres to the raw material block BL (more specifically, the cut surface BL1 of the raw material block BL). Thus the first holding surface 11 having a higher hardness than a hardness of the second holding surface 12 is formed on the raw material block BL (more specifically, the cut surface BL1 of the raw material block BL).

In the example illustrated in FIG. 38, the additive processing device 66 includes a third head moving unit 69 for moving the laser head 67 and the nozzle 68.

The third head moving unit 69 may be a device that is able to move the laser head 67 and nozzle 68 two-dimensionally, or three-dimensionally. In the example illustrated in FIG. 38, the third head moving unit 69 includes a seventh motor 69a (more specifically, an X-axis servo motor) for moving the laser head 67 and nozzle 68 in a direction parallel to the vertical axis, and an eighth motor 69b (more specifically, a Z-axis servo motor) for moving the laser head 67 and nozzle 68 in a direction parallel to the first axis AX. The third head moving unit 69 may include a ninth motor 69c for tilting the laser head 67 and nozzle 68 about an axis parallel to the horizontal plane.

### (Base 80)

In the example illustrated in FIG. 36, the hybrid machine tool 2 includes a base 80. The base 80 supports the first workpiece holder 3, first processing unit 50, and second processing unit 60. Additionally, the base 80 may support the second workpiece holder 4.

### (Controller 7)

In the example illustrated in FIG. 36, the hybrid machine tool 2 includes the controller 7. The controller 7 may be configured by one computer, or a plurality of computers.

As illustrated in FIG. 40, the controller 7 includes a processor 71, a storage device 72 (more specifically, a memory), a communication circuit 73, and an input unit 74 (e.g., display 742 with a touchscreen). The processor 71, storage device 72, communication circuit 73, and input unit 74 are all interconnected via a bus 75. Data required for the making of the chuck soft jaw 1 and the machining of the workpiece 9 (e.g., shape data of the chuck soft jaw 1 or workpiece 9, machining position data of the chuck soft jaw 1 or workpiece 9) may be input to the controller 7 via the input unit 74, or from another computer via the communication circuit 73. The input unit 74 is not limited to a display with a touchscreen. For example, the controller 7 may include an input unit 74 such as a button, switch, lever, pointing device, keyboard, and so on, and a display that presents the data input from the input unit 74 or other information.

The processor 71 executes a processing program 722 stored in the storage device 72 based on the data input to the controller 7 to generate control signals. The communication circuit 73 sends the control signals to various control targets (e.g., first workpiece holder 3, second workpiece holder 4, plurality of processing units 5, first moving unit 81 for moving the first workpiece holder 3 and/or second moving unit 82 for moving the second workpiece 4). The processor 71 thus executing the processing program 722 enables the controller 7 to control the control targets.

The processing program 722 may include a soft jaw making program 722a and a workpiece machining program 722b. More specifically, the storage device 72 may store a soft jaw making program 722a that is executed by the controller 7, and a workpiece machining program 722b that is executed by the controller 7.

### (First holding surface forming mode)

In the example illustrated in FIG. 40 and FIG. 41, the controller 7 is able to implement a first holding surface forming mode by executing the soft jaw making program 722a. The first holding surface forming mode is a mode that includes formation of the first holding surface 11 having a higher hardness than a hardness of the original surface of the raw material block BL on the raw material block BL attached to the chuck main body 31, using the second processing unit 60. The first holding surface forming mode is described in more detail.

The controller 7 sends a first rotation command R1 that is generated by executing the soft jaw making program 722a to the first rotary drive unit 36 of the first workpiece holder 3. The controller 7 also sends a first cutting command J1 that is generated by executing the soft jaw making program 722a to the first processing unit 50. The first rotary drive unit 36 that receives the first rotation command R1 rotates the chuck main body 31 as well as the raw material block BL attached to the chuck main body 31 about the first axis AX. The first processing unit 50 that receives the first cutting command J1 forms a cut surface BL1 on the raw material block BL that is rotating about the first axis AX, using the cutting tool T1. In the case where the first holding surface 11 is formed by processing the original surface itself of the raw material block BL, the process of forming the cut surface BL1 may be omitted.

The controller 7 sends a first holding surface forming command F1 that is generated by executing the soft jaw making program 722a to the second processing unit 60. The second processing unit 60 that receives the first holding surface forming command F1 forms the first holding surface 11 having a higher hardness than a hardness of the original surface of the raw material block BL, by processing the raw material block BL (more specifically, the cut surface BL1).

As illustrated in FIG. 40, in the case where the second processing unit 60 includes a laser irradiator 61, the laser irradiator 61 receives the first holding surface forming command F1, and irradiates the raw material block BL (more specifically, cut surface BL1) with a laser beam LB (see FIG. 15). The raw material block BL (more specifically, cut surface BL1) is subjected to a heat treatment (more specifically, quenching) with the laser beam LB. As a result, the hardness of the cut surface BL1 is increased, and thus the first holding surface 11 having a relatively high hardness is made from the raw material block BL (more specifically, cut surface BL1).

As illustrated in FIG. 41, in the case where the second processing unit 60 includes an additive processing device 66, the additive processing device 66 receives the first holding surface forming command F1, and adds a metal material N having a higher hardness than a hardness of the raw material block BL to the raw material block BL (more specifically, the cut surface BL1, see FIG. 18).

During the formation of the first holding surface 11 on the raw material block BL using the second processing unit 60, the first rotary drive unit 36 of the first workpiece holder 3 may rotate the chuck main body 31 and the raw material block BL attached to the chuck main body 31 about the first axis AX continuously or intermittently.

### (Second holding surface forming mode)

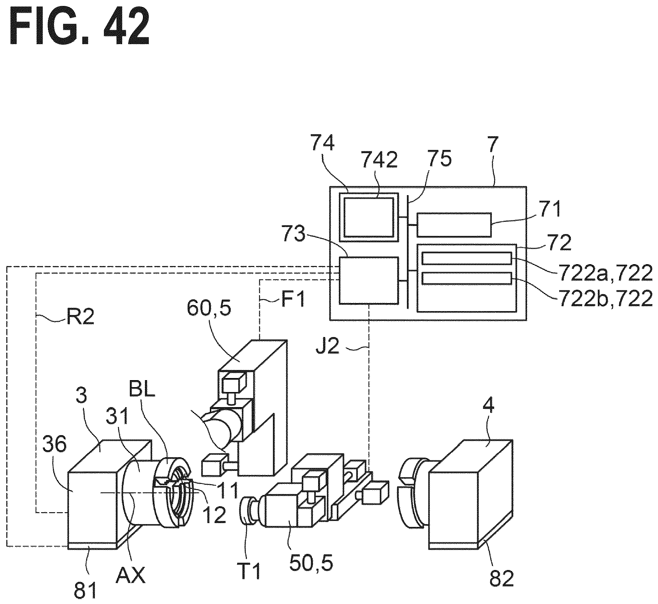

In the example illustrated in FIG. 42, the controller 7 is able to implement a second holding surface forming mode by executing the soft jaw making program 722a. The second holding surface forming mode is a mode in which the second holding surface 12 is formed on the raw material block BL attached to the chuck main body 31, using the first processing unit 50. The second holding surface forming mode is described in more detail.

The controller 7 sends a second rotation command R2 that is generated by executing the soft jaw making program 722a to the first rotary drive unit 36 of the first workpiece holder 3. The controller 7 also sends a second cutting command J2 that is generated by executing the soft jaw making program 722a to the first processing unit 50. The first rotary drive unit 36 that receives the second rotation command R2 rotates the chuck main body 31 as well as the raw material block BL attached to the chuck main body 31 about the first axis AX. The first processing unit 50 that receives the second cutting command J2 forms the second holding surface 12 on the raw material block BL that is rotating about the first axis AX, using the cutting tool T1.

### (First machining mode)

In the example illustrated in FIG. 23, the controller 7 is able to implement a first machining mode by executing the workpiece machining program 722b. The first machining mode is a mode in which the workpiece 9 held by the first holding surface 11 of the chuck soft jaw 1 is cut, using the first processing unit 50. In the example illustrated in FIG. 23, the first machining mode is executed with the oxidized surface 911 of the workpiece 9 being held by the first holding surface 11 of the chuck soft jaw 1. The first machining mode is described in more detail.

In the example illustrated in FIG. 23, the controller 7 sends a first machining command C1 that is generated by executing the workpiece machining program 722b to the first processing unit 50. The first processing unit 50 that receives the first machining command C1 machines the workpiece 9 that is held by the first holding surface 11 of the chuck soft jaw 1.

More specifically, the controller 7 sends a rotation command (more specifically, third rotation command R3) that is generated by executing the workpiece machining program 722b to the first rotary drive unit 36 of the first workpiece holder 3. The controller 7 also sends the first machining command C1 that is generated by executing the workpiece machining program 722b to the first processing unit 50. The first rotary drive unit 36 that receives the rotation command (more specifically, third rotation command R3) rotates the chuck main body 31, the chuck soft jaw 1 supported by the chuck main body 31, and the workpiece 9 held by the first holding surface 11 of the chuck soft jaw 1 about the first axis AX. The first processing unit 50 that receives the first machining command C1 cuts the first portion 95 of the workpiece 9 (more specifically, the oxidized surface 911b on the side in the third direction DR3 of the workpiece 9) that is rotating about the first axis AX, using the cutting tool T1. Thus the machined surface 92 (more specifically, first machined surface 92b) is formed on the workpiece 9.

### (Second machining mode)

In the example illustrated in FIG. 28, the controller 7 is able to implement a second machining mode by executing the workpiece machining program 722b. The second machining mode is a mode in which the workpiece 9 held by the second holding surface 12 of the chuck soft jaw 1 is cut, using the first processing unit 50. In the example illustrated in FIG. 28, the second machining mode is executed with the machined surface 92 of the workpiece 9 being held by the second holding surface 12 of the chuck soft jaw 1. The second machining mode is described in more detail.

In the example illustrated in FIG. 28, the controller 7 sends a second machining command C2 that is generated by executing the workpiece machining program 722b to the first processing unit 50. The first processing unit 50 that receives the second machining command C2 machines the workpiece 9 held by the second holding surface 12 of the chuck soft jaw 1.

More specifically, the controller 7 sends a rotation command (more specifically, fourth rotation command R4) that is generated by executing the workpiece machining program 722b to the first rotary drive unit 36 of the first workpiece holder 3. The controller 7 also sends the second machining command C2 that is generated by executing the workpiece machining program 722b to the first processing unit 50. The first rotary drive unit 36 that receives the rotation command (more specifically, fourth rotation command R4) rotates the chuck main body 31, the chuck soft jaw 1 supported by the chuck main body 31, and the workpiece 9 held by the second holding surface 12 of the chuck soft jaw 1 about the first axis AX. The first processing unit 50 that receives the second machining command C2 machines the workpiece 9 that is rotating about the first axis AX, using a tool T such as the cutting tool T1.

In the example illustrated in FIG. 28, the first processing unit 50 is holding the cutting tool T1. In this case, the first processing unit 50 that receives the second machining command C2 cuts the workpiece 9 that is rotating about the first axis AX, using the cutting tool T1.

Alternatively, or additionally, as illustrated in FIG. 30(d), the first processing unit 50 may be holding a grinding tool T2. In this case, the first processing unit 50 that receives the second machining command C2 grinds the workpiece 9 that is rotating about the first axis AX, using the grinding tool T2.

Alternatively, or additionally, as illustrated in FIG. 32(d), the first processing unit 50 may be holding a deburring tool T4. In this case, the first processing unit 50 that receives the second machining command C2 removes a bur 96b from the workpiece 9 that is rotating about the first axis AX, using the deburring tool T4.

Alternatively, or additionally, as illustrated in FIG. 33(d), the first processing unit 50 may be holding a milling tool T6. In this case, the first processing unit 50 that receives the second machining command C2 mills the workpiece 9 that is rotating about the first axis AX, using the milling tool T6. The milling operation is carried out on the workpiece 9 that has been stopped from rotating about the first axis AX.

Alternatively, or additionally, as illustrated in FIG. 34(d), the first processing unit 50 may be holding a gear cutting tool T5. In this case, the first processing unit 50 that receives the second machining command C2 forms a gear 96d on the workpiece 9 that is rotating about the first axis AX, using the gear cutting tool T5. More specifically, the first rotary drive unit 36 that receives a rotation command rotates the workpiece 9 about the first axis AX. The first processing unit 50 that receives the second machining command C2 rotates the gear cutting tool T5 about the tool axis. The first processing unit 50 that receives the second machining command C2 also brings the gear gutting tool T5 into contact with the workpiece 9. As a result of the contact between the workpiece 9 rotating about the first axis AX and the gear cutting tool T5 rotating about the tool axis, the gear 96d is formed on the workpiece 9.

In the case where the hybrid machine tool 2 includes the second workpiece holder 4, the controller 7 may carry out a first transfer mode, a third machining mode, and a second transfer mode, all to be described later, after the execution of the first machining mode and before the execution of the second machining mode.

### (First transfer mode)

In the example illustrated in FIG. 24 and FIG. 25, the controller 7 is able to implement a first transfer mode by executing the workpiece machining program 722b. The first transfer mode is a mode in which the workpiece 9 is transferred from the first workpiece holder 3 to the second workpiece holder 4. The first transfer mode is described in more detail.

In the example illustrated in FIG. 24, the controller 7 sends a first motion command M1 that is generated by executing the workpiece machining program 722b to at least one of the first moving unit 81 and the second moving unit 82. One of the first workpiece holder 3 and the second workpiece holder 4 is moved by the moving unit that receives the first motion command M1 in a direction toward the other one of the first workpiece holder 3 and the second workpiece holder 4.

In the example illustrated in FIG. 24, the controller 7 sends a first holding command H1 that is generated by executing the workpiece machining program 722b to the second drive unit 44. The second drive unit 44 that receives the first holding command H1 moves the jaw 42 (more specifically, soft jaw 42a) in a direction toward the workpiece 9 (more specifically, the first machined surface 92b of the workpiece 9). The workpiece 9 (more specifically, the first machined surface 92b of the workpiece 9) is thus held by the jaw 42 of the second workpiece holder 4.

In the example illustrated in FIG. 24, the controller 7 sends a first release command E1 that is generated by executing the workpiece machining program 722b to the first drive unit 34. The first drive unit 34 that receives the first release command E1 moves the chuck soft jaw 1 in a direction away from the workpiece 9 (more specifically, the oxidized surface 911 of the workpiece 9). The workpiece 9 is thus released from the first workpiece holder 3.

In the example illustrated in FIG. 24 and FIG. 25, the step of transferring the workpiece 9 from the first workpiece holder 3 to the second workpiece holder 4 is carried out automatically using the first workpiece holder 3 and second workpiece holder 4. Alternatively, at least a part of the transfer step may be carried out manually.

### (Third machining mode)

In the example illustrated in FIG. 26, the controller 7 is able to implement a third machining mode by executing the workpiece machining program 722b. The third machining mode is a mode in which the workpiece 9 held by the jaw 42 (more specifically, soft jaw 42a) of the second workpiece holder 4 is machined, using the first processing unit 50. The third machining mode is described in more detail.

In the example illustrated in FIG. 26, the controller 7 sends a third machining command C3 that is generated by executing the workpiece machining program 722b to the first processing unit 50. The first processing unit 50 that receives the third machining command C3 machines the workpiece 9 held by the second workpiece holder 4.

More specifically, the controller 7 sends a rotation command (more specifically, fifth rotation command R5) that is generated by executing the workpiece machining program 722b to the second rotary drive unit 46 of the second workpiece holder 4. The controller 7 also sends the third machining command C3 that is generated by executing the workpiece machining program 722b to the first processing unit 50. The second rotary drive unit 46 that receives the rotation command (more specifically, fifth rotation command R5) rotates the second chuck main body 41, the jaw 42 supported by the second chuck main body 41, and the workpiece 9 held by the jaw 42 about the second axis AT. The first processing unit 50 that receives the third machining command C3 cuts a third portion 97 of the workpiece 9 (more specifically, the oxidized surface 911 of the workpiece 9) that is rotating about the second axis AT, using the cutting tool T1. Thus the machined surface 92 (more specifically, second machined surface 92a on the side in the fourth direction DR4) is formed on the workpiece 9.

Additionally, as illustrated in FIG. 30(b), the third machining mode executed by the controller 7 may grind the workpiece 9 (e.g., the machined surface 92 of the workpiece). More specifically, the second rotary drive unit 46 that receives the fifth rotation command R5 may rotate the workpiece 9 about the second axis AT. The first processing unit 50 that receives the third machining command C3 from the controller 7 may grind the workpiece 9 that is rotating about the second axis AT, using the grinding tool T2.

Alternatively, or additionally, as illustrated in FIG. 32(b), the third machining mode executed by the controller may form an internal gear 96c on the workpiece 9. More specifically, the second rotary drive unit 46 that receives the fifth rotation command R5 may rotate the workpiece 9 about the second axis AT. The first processing unit 50 that receives the third machining command C3 may rotate the skiving cutter T3 about the tool axis. The first processing unit 50 that receives the third machining command C3 may also bring the skiving cutter T3 into contact with an inner circumferential surface of the workpiece 9.

### (Second transfer mode)

In the example illustrated in FIG. 27, the controller 7 is able to implement a second transfer mode by executing the workpiece machining program 722b. The second transfer mode is a mode in which the workpiece 9 is transferred from the second workpiece holder 4 to the first workpiece holder 3. The second transfer mode is described in more detail.

In the example illustrated in FIG. 27, the controller 7 sends a second motion command M2 that is generated by executing the workpiece machining program 722b to at least one of the first moving unit 81 and the second moving unit 82. One of the first workpiece holder 3 and the second workpiece holder 4 is moved by the moving unit that receives the second motion command M2 in a direction toward the other one of the first workpiece holder 3 and the second workpiece holder 4.

In the example illustrated in FIG. 27, the controller 7 sends a second holding command H2 that is generated by executing the workpiece machining program 722b to the first drive unit 34. The first drive unit 34 that receives the second holding command H2 moves the second holding surface 12 of the chuck soft jaw 1 in a direction toward the machined surface 92 of the workpiece 9 (more specifically, the second machined surface 92a on the side in the fourth direction DR4 of the workpiece 9). The machined surface 92 of the workpiece 9 is thus held by the second holding surface 12 of the chuck soft jaw 1.

In the example illustrated in FIG. 27, the controller 7 sends a second release command E2 that is generated by executing the workpiece machining program 722b to the second drive unit 44. The second drive unit 44 that receives the second release command E2 moves the jaw 42 (more specifically, soft jaw 42a) in a direction away from the workpiece 9. The workpiece 9 is thus released from the second workpiece holder 4.

In the example illustrated in FIG. 27, the step of transferring the workpiece 9 from the second workpiece holder 4 to the first workpiece holder 3 is carried out automatically using the first workpiece holder 3 and second workpiece holder 4. Alternatively, at least a part of the transfer step may be carried out manually.

Obviously, the present invention is not limited to the various embodiments and modifications described above, and these embodiments or modifications thereof can be modified or changed as required within the scope of the technical concept of the present invention. Various techniques used in respective embodiments or modifications thereof may be applied to other embodiments or modifications as long as there are no technical contradictions. Optional or additional features in various embodiments and modifications can be omitted as suited.

### Reference Signs List

1 ... Chuck soft jaw, 1B ... Second chuck soft jaw, 1C ... Third chuck soft jaw, 2 ... Hybrid machine tool, 3 ... First workpiece holder, 4 ... Second workpiece holder, 5 ... Processing unit, 7 ... Controller, 9, 9A, 9B, 9C, 9D ... Workpiece, 10 ... Block part, 10a ... Intermediate portion, 10b ... Distal end portion, 11 ... First holding surface, 11a ... Surface formed by quenching, 11b ... Metal layering surface, 12 ... Second holding surface, 14 ... Base portion, 15 ... Through hole, 16 ... First step surface, 17 ... Second step surface, 18 ... Connecting surface, 31 ... Chuck main body, 32 ... Movable part, 33 ... Base part, 34 ... First drive unit, 36 ... First rotary drive unit, 41 ... Second chuck main body, 42 ... Jaw, 42a ... Soft jaw, 44 ... Second drive unit, 46 ... Second rotary drive unit, 48 ... Tailstock, 50 ... First processing unit, 52 ... First head, 55 ... First head moving unit, 55a ... First motor, 55b ... Second motor, 55c ... Third motor, 57 ... Rotary drive unit, 60 ... Second processing unit, 61 ... Laser irradiator, 62 ... Second head, 64 ... Second head moving unit, 64a ... Fourth motor, 64b ... Fifth motor, 64c ... Sixth motor, 66 ... Additive processing device, 67 ... Laser head, 68 ... Nozzle, 69 ... Third head moving unit, 69a ... Seventh motor, 69b ... Eighth motor, 69c ... Ninth motor, 71 ... Processor, 72 ... Storage device, 73 ... Communication circuit, 74 ... Input unit, 75 ... Bus, 80 ... Base, 81 ... First moving unit, 82 ... Second moving unit, 91 ... First surface of workpiece, 91m ... Surface formed by cutting inner surface of workpiece, 91n ... Inner surface of workpiece, 91u ... Outer surface of workpiece, 91v ... Surface formed by cutting outer surface of workpiece, 92 ... Machined surface, 92a ... Second machined surface, 92b ... First machined surface, 95 ... First portion, 96 ... Second portion, 96b ... Bur, 96c ... Internal gear, 96d ... Gear, 96h ... Hole, 97 ... Third portion, 111 ... Concavity and convexity, 111v ... Groove, 115 ... First arc-shaped surface, 122 ... Machined surface, 125 ... Second arc-shaped surface 142 ... First portion with concavity and convexity, 312 ... Second portion with concavity and convexity, 722 ... Processing program, 722a ... Soft jaw making program, 722b ... Workpiece machining program, 742 ... Display with touchscreen, 911, 911a, 911b ... Oxidized surface, AT ... Second axis AW ... Center axis of workpiece, AX ... First axis, BL ... Raw material block, BL1 ... Cut surface of raw material block, BT ... Bolt, LB ... Laser beam, N ... Metal material, P ... Metal powder, T ... Tool, T1 ... Cutting tool, T2 ... Grinding tool, T3 ... Skiving cutter, T4 ... Deburring tool, T5 ... Gear cutting tool, T6 ... Milling tool, V ... Groove

## Claims

1. A chuck soft jaw supported by a chuck main body so as to be movable in a first direction away from a center axis of the chuck main body and in a second direction toward the center axis, the chuck soft jaw comprising:
a first holding surface capable of holding a first surface of a workpiece; and
a second holding surface capable of holding a machined surface of the workpiece,
the first holding surface having a higher hardness than a hardness of the second holding surface.

2. The chuck soft jaw according to claim 1, wherein the second holding surface is a machined surface.

3. The chuck soft jaw according to claim 1 or 2, wherein the first holding surface is a surface formed by heat treatment.

4. The chuck soft jaw according to any one of claims 1 to 3, wherein the first holding surface is a metal layering surface.

5. The chuck soft jaw according to any one of claims 1 to 4, further comprising a base portion attached to the chuck main body,
wherein the second holding surface is positioned between the first holding surface and the base portion in a direction along the center axis of the chuck main body.

6. The chuck soft jaw according to any one of claims 1 to 5, wherein the first holding surface is a surface that holds an outer surface of the workpiece,
the second holding surface being positioned at a smaller distance than the first holding surface relative to the center axis of the chuck main body.

7. The chuck soft jaw according to any one of claims 1 to 5, wherein the first holding surface is a surface that holds an inner surface of the workpiece,
the second holding surface being positioned at a larger distance than the first holding surface relative to the center axis of the chuck main body.

8. A method of making the chuck soft jaw according to any one of claims 1 to 7, comprising:
a step of attaching a raw material block to the chuck main body; and
a step of making a chuck soft jaw from the raw material block with the raw material block being attached to the chuck main body,
the step of making the chuck soft jaw from the raw material block including:
processing the raw material block to form the first holding surface on the raw material block; and
cutting the raw material block to form the second holding surface on the raw material block.

9. The method of making the chuck soft jaw according to claim 8, wherein forming of the first holding surface on the raw material block includes at least one of:
irradiating the raw material block with a laser beam; and
adding a metal material having a higher hardness than a hardness of the raw material block to the raw material block.

10. A workpiece machining method comprising:
a step of preparing a chuck soft jaw having a second holding surface, and a first holding surface having a higher hardness than a hardness of the second holding surface;
a step of attaching a workpiece to the chuck soft jaw that is supported by a chuck main body of a first workpiece holder so as to be movable in a first direction away from a center axis of the chuck main body and in a second direction toward the center axis;
a step of cutting a first portion of the workpiece with an oxidized surface of the workpiece being held by the first holding surface of the chuck soft jaw; and
a step of machining a second portion of the workpiece with a machined surface of the workpiece that has been formed by cutting the oxidized surface of the workpiece being held by the second holding surface of the chuck soft jaw.

11. The workpiece machining method according to claim 10, further comprising:
a step of transferring the workpiece from the first workpiece holder to a second workpiece holder after execution of the step of cutting the first portion of the workpiece;
a step of cutting the oxidized surface of the workpiece so that the machined surface is formed on the workpiece that is held by the second workpiece holder; and
a step of transferring the workpiece from the second workpiece holder to the first workpiece holder so that the machined surface is held by the second holding surface.

12. A hybrid machine tool comprising:
a plurality of processing units configured to make a chuck soft jaw from a raw material block attached to a chuck main body, the chuck soft jaw including a first holding surface configured to hold an oxidized surface of a workpiece and a second holding surface configured to hold a machined surface of the workpiece;
a first workpiece holder configured to hold the workpiece via the chuck soft jaw; and
a controller configured to control the plurality of processing units and the first workpiece holder,
the first workpiece holder including:
the chuck main body configured to support the chuck soft jaw having the first holding surface and the second holding surface;
a first drive unit configured to move the chuck soft jaw in a first direction away from a center axis of the chuck main body or in a second direction toward the center axis; and
a rotary drive unit configured to rotate the chuck main body about the center axis,
the plurality of processing units including:
a first processing unit configured to form the second holding surface on the raw material block by cutting the raw material block attached to the chuck main body; and
a second processing unit configured to form the first holding surface having a higher hardness than a hardness of the second holding surface on the raw material block by processing the raw material block attached to the chuck main body.

13. The hybrid machine tool according to claim 12, further comprising a second workpiece holder configured to be capable of receiving the workpiece from the first workpiece holder and handing over the workpiece to the first workpiece holder,
the second workpiece holder including:
a second chuck main body configured to support a jaw capable of holding the workpiece; and
a second rotary drive unit configured to rotate the second chuck main body about a center axis of the second chuck main body.

14. The hybrid machine tool according to claim 12 or 13, wherein the second processing unit includes at least one of:
a laser irradiator that performs heat treatment on the raw material block; and
an additive processing device that adds a metal material having a higher hardness than a hardness of the raw material block to the raw material block.

15. The hybrid machine tool according to any one of claims 12 to 14, further comprising:
a storage device configured to store a soft jaw making program that is executed by the controller; and a workpiece machining program that is executed by the controller,
wherein the second processing unit that receives a first holding surface forming command from the controller executing the soft jaw making program is configured to form the first holding surface on the raw material block attached to the chuck main body,
the first holding surface having a higher hardness than a hardness of an original surface of the raw material block, and
wherein the first processing unit that receives a first machining command from the controller executing the workpiece machining program is configured to machine the workpiece held by the first holding surface of the chuck soft jaw.
